# EUROPÄISCHE PATENTANMELDUNG

(11) **EP 4 604 101 A1**
(43) Veröffentlichungstag der Anmeldung: **20.08.2025**
(21) Anmeldenummer: 24157899.6
(22) Anmeldetag: 15.02.2024
(51) Int. Cl.: G09B 19/24

(54) **SCHULUNGS-E-HANDSCHWEISSBRENNER, SCHULUNGS-STABELEKTRODE UND SCHWEISSSCHULUNGSANORDNUNG ZUR DURCHFÜHRUNG EINES VIRTUELLEN E-HANDSCHWEISSVORGANGES**

(71) Anmelder: FRONIUS INTERNATIONAL GmbH, 4643 Pettenbach (AT)
(72) Erfinder: Jaksch, Tobias, 4643 Pettenbach (AT); Zauner, Nikolaus, 4643 Pettenbach (AT); Stumpfl, Christian, 4643 Pettenbach (AT); Fleischanderl, Christoph, 4643 Pettenbach (AT)
(74) Vertreter: Patentanwälte Pinter & Weiss OG

(57) **Zusammenfassung**

Um einen Schulungs-E-Handschweißbrenner (1) bereitzustellen, der ein realitätsnahes Klemmen und Lösen von Schulungs-Stabelektroden (6) erlaubt, wird eine Rückstellkraft (Fr) zum Rückstellen eines Klemmhebels (4) des Schulungs-E-Handschweißbrenner (1) größer gewählt als eine Klemmkraft (Fk) zum Klemmen der Schulungs-Stabelektroden (6), und es wird eine Schulungs-Stabelektrode (6) vorgesehen, die eine erste sich entlang einer Längsachse der Schulungs-Stabelektrode (6) erstreckende Längs-Elektrode (61), eine zweite sich entlang der Längsachse der Schulungs-Stabelektrode (6) erstreckende Längs-Elektrode (62), sowie eine zwischen den Längs-Elektroden angeordnete isolierenden Schicht (63) aufweist, sodass eine erste Klemmbacke (31) der Klemmbacken (31, 32) des Schulungs-E-Handschweißbrenners (1) von der ersten Längs-Elektrode kontaktierbar ist und eine zweite Klemmbacke (32) der Klemmbacken (31, 32) des Schulungs-E-Handschweißbrenner (1) von der zweiten Längs-Elektrode kontaktierbar ist, um ein veränderliches elektrisches Messsignal (se) über die Klemmbacken (31, 32) zu übertragen.

## Beschreibung

Die gegenständliche Erfindung betrifft einen Schulungs-E-Handschweißbrenner, eine Schulungs-Stabelektrode, eine Schweißschulungsanordnung, sowie ein Verfahren zur Durchführung eines virtuellen E-Handschweißvorganges.

Schweißen, egal ob Gasschmelzschweißen, Autogenschweißen, Lichtbogenhandschweißen, Schutzgasschweißen, Plasmaschweißen oder Laserschweißen, spielt als wichtigstes Fügeverfahren der modernen Produktionstechnik eine wesentliche Rolle in einer Vielzahl von modernen Produktions- und Herstellungsprozessen. Beispielgebend sei auf die Herstellung moderner Fortbewegungsmittel verwiesen, wie von Kraftfahrzeugen (Kfz), Eisenbahnen oder Flugzeugen, was ohne moderne und hochpräzise Schweißtechnik nicht denkbar ist. Wie generell in der modernen Produktionstechnik kommt es auch in der Schweißtechnik vermehrt zum Einsatz zumindest teilautomatisierter Schweißprozesse ("Roboterschweißen"), wodurch in vielen Fällen Zeit und Ressourcen gespart werden können.

Trotz des zunehmenden Einsatzes automatisierter Schweißprozesse ist die klassische Form des Schweißens, das sogenannten "Handschweißen", nach wie vor wichtiger Bestandteil unterschiedlichster technischer Prozesse. Beim Handschweißen führt ein Handschweißer die geforderten Schweißarbeiten durch manuelles Bewegen eines Handschweißbrenners durch. Bekanntermaßen wird Handschweißen je nach Art der eingesetzten Materialien in verschiedene Handschweißverfahren unterteilt, wie beispielsweise das E-Handschweißen (Elektrodenschweißen), das WIG-Schweißen (Wolfram-Inertgas-Schweißen), das MIG-Schweißen (Metall-Inertgas-Schweißen) oder das MAG-Schweißen (Metall-Aktivgas-Schweißen).

Die Motive und Gründe, um anstelle von automatisiertem Roboterschweißen auf Handschweißen zurückzugreifen, sind vielfältig. Oft sind Schweißaufgaben komplex, individuell und einzigartig, sodass eine Automatisierung eines zugehörigen Schweißvorganges nicht mit vertretbarem Aufwand möglich ist. Auch bei Schweißaufgaben im Außenbereich ist eine Automatisierung vielfach ausgeschlossen. In anderen Fällen kann die Automatisierung eines Schweißvorganges aufgrund eines großen Anfangsaufwandes, der sich unter anderem durch die Programmierung einer Schweißsteuerung ergeben kann, aus wirtschaftlichen Gründen nicht vertretbar sein.

Da sich die Tätigkeiten eines Handschweißers entsprechend den obigen Ausführungen auf komplexe und individuelle Schweißaufgaben konzentrieren, und da die stets gestellten Forderungen nach schnelleren, präziseren und günstigeren Schweißvorgängen auch auf den ausführenden Handschweißer durchschlagen, ist unschwer zu erkennen, dass die Ausbildung zum Handschweißer ein fordernder und aufwendiger Prozess ist, der viel Übungszeit, umfangreiche Betreuung durch erfahrenes Fachpersonal, und insbesondere Verbrauchs- bzw. Übungsmaterial fordert.

Um den Prozess der Ausbildung zum Handschweißer zu unterstützen und zu vereinfachen, um darüber hinaus die Ausbildung für Anfänger möglichst sicher zu gestalten, aber auch um Verbrauchs- bzw. Übungsmaterialien zu sparen, wurden sogenannte Schweißschulungsanordnungen zum virtuellen Schweißen entwickelt. Schweißschulungsanordnungen und das damit ausführbare, sogenannte "virtuelle Schweißen" erlauben es, komplexe Schweißaufgaben und schwierige Situationen gefahrlos und kostengünstig realitätsnah zu simulieren und immer wieder zu üben. Das Sicherheitsrisiko für Anfänger, das beim Schweißen insbesondere durch heiße und helle Lichtbögen aber auch durch entstehenden Schweißrauch hoch sein kann, verschwindet an der Schweißschulungsanordnung bzw. am "Schweißsimulator" zur Gänze. Mithilfe einer Schweißschulungsanordnung zum virtuellen Schweißen können auszubildende Handschweißer an gängigen Schulungs-Werkstücken grundlegende Schweißfertigkeiten/Handfertigkeiten erlernen und trainieren. Darüber hinaus lassen sich durch virtuelles Schweißen teure Verbrauchsmaterialien wie Übungsbauteile aus unterschiedlichen Metallen/Stählen/Legierungen (und deren teils aufwändige Vorbereitung), Draht und/oder Schutzgas und Energie einsparen.

Die Grundbestandteile einer Schweißschulungsanordnung beim E-Hand-Schweißen sind ein Schulungs-E-Handschweißbrenner, der im Fall einer Simulation eines Schweißprozesses mit abschmelzender Elektrode eine Schulungs-Stabelektrode hält, ein Schulungs-Werkstück, ein Schweißsimulator und ein elektronisches Display (elektronischer Bildschirm). Im Zuge des virtuellen Schweißvorganges wird der Schulungs-E-Handschweißbrenner entlang des Schulungs-Werkstücks bewegt. Aus den Bewegungsdaten des Schulungs-E-Handschweißbrenners und aus eingestellten Schweißparametern, wie Schweißstrom, Drahtvorschubgeschwindigkeit usw., ermittelt der Schweißsimulator eine sogenannte virtuelle Schweißnaht, die am Display dargestellt wird.

Während die Erfassung und Verarbeitung von Bewegungsdaten von Schulungs-E-Handschweißbrennern Gegenstand vieler druckschriftlicher Veröffentlichungen ist, vgl. US 2020/0265750 A1, EP 2863376 A1 oder US 2021/0158724 A1, zeigt vor allem der jüngere Stand der Technik, dass vermehrt die simulatorische Nachbildung von haptischen Eindrücken, die sich beim Handschweißen einstellen, in den Fokus von Forschung und Entwicklung auf dem technischen Gebiet der Schweißsimulation rückt.

Beispielsweise offenbart EP 3 131 083 B1 eine Stabelektroden-Einziehanordnung, die konfiguriert ist, eine Simulationsstabelektrode zur Stabelektroden-Einziehanordnung einzuziehen, um den Verbrauch der Simulationsstabelektrode während eines simulierten Stabschweißprozesses zu simulieren.

Die Schrift US 2017/294140 A beschreibt einen Simulationselektrodenhalter mit einer einziehbaren Stabelektrode, deren Verbrauch durch die Bewegung des Stabes simuliert wird. Der Simulationselektrodenhalter umfasst einen Mikromotor, Rollen, Muttern und Schrauben, welche durch die Kunststoffrollenführung einen exakten Druck auf die Verbrauchsbewegungen ausüben.

US4931018A beschreibt ähnlich zu den zuvor genannten Schriften ein System zur Simulation von Schweißvorgängen mit beweglichen Stabelektroden. Ein im Griff angeordneter Elektromotor kann den Schweißvorgang und den Verbrauch der Elektrode simulieren, indem er die Elektrode in eine Richtung bewegt.

Obwohl die genannten Schriften präzise Simulationen des Abbrennens von Stabelektroden ermöglichen, bieten sie keine Ansätze, die auch ein realitätsnahes Nachstellen von beim Klemmen und/oder Lösen von Stabelektroden entstehenden haptischen Eindrücken erlauben würden. In Schulungs-E-Handschweißbrennern können aus Platzgründen typischerweise nur kleine und folglich leistungsschwache Elektromotoren zum Bewegen von Stabelektroden eingesetzt werden. Ein kleiner und folglich leistungsschwacher Elektromotor, der in einem Schulungs-E-Handschweißbrenner Platz findet, ist allerdings nicht in der Lage, eine Stabelektrode gegen einen mechanischen Widerstand zu bewegen, der sich bei einer im Realbetrieb üblichen Klemmung einstellt. Im Stand der Technik ist es folglich erforderlich, (Schulungs-) Stabelektroden nur sehr schwach, d.h. unnatürlich leicht zu klemmen.

Klemmkräfte zum Klemmen von Schweißelektroden stehen in den bekannten Handschweißbrennen in unmittelbarem Zusammenhang mit den manuell, meist über einen Klemmhebel, aufzubringenden Kräften zum Betätigen eines entsprechenden Klemmmechanismus, typischerweise über eine mechanische Hebelwirkung. Unnatürlich geringe Klemmkräfte vermitteln Schweißanfängern folglich falsche Eindrücke hinsichtlich der im Realbetrieb zum Klemmen und Lösen von Stabelektroden aufzubringenden Kräfte.

In Anbetracht dieses Defizits ist es Aufgabe der gegenständlichen Erfindung, einen Schulungs-E-Handschweißbrenner bereitzustellen, der ein realitätsnahes Klemmen und Lösen von Schulungs-Stabelektroden erlaubt.

Diese Aufgabe wird durch die Merkmale der unabhängigen Ansprüche gelöst. Die unabhängigen Ansprüche beschreiben hierbei eine Schulungs-E-Handschweißbrenner, eine Schweißschulungsanordnung, sowie ein Verfahren zur Durchführung eines virtuellen Handschweißvorganges.

Konkret weist der erfindungsgemäße Schulungs-E-Handschweißbrenner einen Handschweißbrenner-Grundkörper auf, sowie eine Klemmvorrichtung zum Festklemmen einer Schulungs-Stabelektrode mit einer vorgegebenen Klemmkraft. Die Klemmvorrichtung umfasst eine erste Klemmbacke und eine zweite Klemmbacke, einen am Handschweißbrenner-Grundkörper gelagerten und manuell betätigbaren Klemmhebel zum Betätigen zumindest einer der Klemmbacken, und eine zwischen dem Handschweißbrenner-Grundkörper und dem Klemmhebel angeordnete Rückstellvorrichtung, die den Klemmhebel ohne manuelle Betätigung in einer Rückstellposition hält und eine auf den Klemmhebel wirkende Rückstellkraft bereitstellt. Der Klemmhebel ist vorzugsweise drehbar am Handschweißbrenner-Grundkörper gelagert. Zur Lösung der gestellten technischen Aufgabe ist erfindungsgemäß vorgesehen, dass die Rückstellkraft größer ist als die Klemmkraft, vorzugsweise übersteigt die Rückstellkraft die Klemmkraft um einen vorgegebenen Faktor größer 2, oder größer 3, oder grö-ßer Faktor 5, oder größer 10.

Der erfindungsgemäße Schulungs-E-Handschweißbrenner steht damit in einem klaren Unterschied zu aus dem Stand der Technik bekannten Handschweißbrennern, bei denen bewusst mitunter große Klemmkräfte vorgesehen werden, um eingesetzte Schweißelektroden möglichst fest zu klemmen und einen guten Stromübergang von den Klemmbacken auf die Schweißelektrode zu ermöglichen. Die bei bekannten Handschweißbrennern vorgesehenen Hebelmechanismen zur Übertragung von manuell auf einen Klemmhebel aufgebrachten Kräfte in Klemmkräfte zum Klemmen von Elektroden sind zu diesem Zweck üblicherweise derart ausgestaltet, dass auf einen Klemmhebel aufgebrachte Kräfte verstärkt werden, sodass sich letztlich im Vergleich zu den auf den Klemmhebel wirkenden Rückstellkräfte mitunter wesentlich größere Klemmkräfte einstellen.

Durch die gegenständliche Erfindung kann eine reale Klemmung nachgestellt werden, bei der dennoch einerseits eine Einziehvorrichtung, vorzugsweise ein Getriebemotor oder ein Servomotor, zum Bewegen einer zwischen den Klemmbacken geklemmten Elektrode nur gering belastet wird, andererseits das Einspannen über eine zweite viel stärkere Kraft realitätsnah simuliert wird. Besonders vorteilhaft wirkt sich dieses Konzept auf die Lebensdauer von Einziehvorrichtungen, insbesondere von Getriebemotoren oder Servomotoren, aus.

Vorteilhafte Ausgestaltungsformen des erfindungsgemäßen Schulungs-E-Handschweißbrenner sind in den abhängigen Ansprüche 2 bis 14 angegeben.

Weiters wird die gegenständliche Aufgabe gelöst durch eine Schulungs-Stabelektrode, die in vorteilhafter Weise in einem erfindungsgemäßen Schulungs-E-Handschweißbrenner verwendet werden kann, und eine erste sich entlang einer Längsachse der Schulungs-Stabelektrode erstreckende Längs-Elektrode, eine zweite sich entlang der Längsachse der Schulungs-Stabelektrode erstreckende Längs-Elektrode, sowie ein zwischen den Längs-Elektroden angeordnete isolierenden Schicht aufweist, sodass eine erste Klemmbacke der Klemmbacken des erfindungsgemäßen Schulungs-E-Handschweißbrenners von der ersten Längs-Elektrode kontaktierbar ist und eine zweite Klemmbacke der Klemmbacken des Schulungs-E-Handschweißbrenner von der zweiten Längs-Elektrode kontaktierbar ist. Auf diese Weise kann ein veränderliches elektrisches Messsignal an den Klemmbacken übergeben bzw. abgegriffen und weitergeleitet werden. Es wird so möglich, Messsignale, die beispielsweise die Kontaktierung zwischen der Schulungs-Stabelektrode und einem Schulungs-Werkstück beschreiben, und von in der Schulungs-Stabelektrode angeordneten Sensoren, wie einer Kraftmessdose an der Spitze der Schulungs-Stabelektrode, erfasst werden, über die Klemmbacken auszulesen und zur Steuerung einer Bewegung der Schulungs-Stabelektrode in z.B. eine Steuereinheit oder Simulationseinheit weiterzuleiten. Zu diesem Zweck können die Klemmbacken gleichzeitig die Funktion von Elektroden annehmen, an die entsprechende Signalkabel zur Weiterleitung der genannten Signale angeordnet sind.

Vorteilhafte Ausgestaltungen einer erfindungsgemäßen Schulungs-Stabelektrode sind in den abhängigen Ansprüchen 16 bis 18 angegeben.

Der erfindungsgemäße Schulungs-E-Handschweißbrenners und die erfindungsgemäße Schulungs-Stabelektrode werden in bevorzugter Weise in einer Schweißschulungsanordnung zur Durchführung eines virtuellen Handschweißvorganges eingesetzt.

Eine derartige Schweißschulungsanordnung umfasst ein Schulungs-Werkstück, einen erfindungsgemäßen Schulungs-E-Handschweißbrenner der eine erfindungsgemäße Schulungs-Stabelektrode hält, ein Mixed-Reality-Headset, einen vorgegebenen geometrischen Headset-Bezugspunkt, ein Mixed-Reality-Display zur Anzeige einer Sequenz von Mixed-Reality-Bildern des virtuellen Handschweißvorganges, und ein Kamerasystem mit einem räumlichen Kamera-Sichtfeld zur Erfassung von Kamera-Bildern von sich im Kamera-Sichtfeld befindenden Objekten. Während der Durchführung des virtuellen Handschweißvorganges befinden sich bei einer derartigen Schweißschulungsanordnung zumindest ein Teil des Schulungs-Werkstücks und zumindest ein Teil des Schulungs-E-Handschweißbrenners mit der Schulungs-Stabelektrode im Kamera-Sichtfeld. Das Mixed-Reality-Display und das Kamerasystem sind entlang einer Sichtlinie des Mixed-Reality-Headsets angeordnet. Weiters ist bevorzugt eine Simulationseinheit vorgesehen, welche ausgestaltet ist, aus den Kamera-Bildern eine Geometrie und/oder eine Form und/oder eine Type des Schulungs-E-Handschweißbrenners sowie des Schulungs-Werkstücks und einen zeitlichen Verlauf der Raumlagen des Schulungs-E-Handschweißbrenners sowie des Schulungs-Werkstücks relativ zum Headset-Bezugspunkt zu ermitteln, unter Berücksichtigung zumindest eines vorgegebenen Schulungs-Schweißparameters und unter Berücksichtigung des zeitlichen Verlaufs der Raumlage des Schulungs-E-Handschweißbrenners eine virtuelle Schweißnaht am Schulungs-Werkstück zu ermitteln, zumindest jenen Teil der bis zu einem aktuellen Zeitpunkt Tₐₖₜ des virtuellen Handschweißvorganges ermittelten virtuellen Schweißnaht, welcher innerhalb des zum aktuellen Zeitpunkt Tₐₖₜ vorliegenden Kamera-Sichtfeldes liegt, dem zum aktuellen Zeitpunkt Tₐₖₜ vorliegenden Kamera-Bild zu überlagern, um ein Mixed-Reality-Bild des virtuellen Handschweißvorganges zum aktuellen Zeitpunkt Tₐₖₜ zu erzeugen, und das ermittelte Mixed-Reality-Bild an das Mixed-Reality-Display zu übermitteln, um es als Teil der Sequenz von Mixed-Reality-Bildern des virtuellen Handschweißvorganges am Mixed-Reality-Display anzuzeigen. Durch die Verwendung des erfindungsgemäßen Schulungs-E-Handschweißbrenners und der erfindungsgemäßen Schulungs-Stabelektrode in der beschriebenen Schweißschulungsanordnung werden besonders realitätsnahe Schweißsimulationen möglich.

Vorteilhafte Ausgestaltungen einer Schweißschulungsanordnung und insbesondere der Einbindung des erfindungsgemäßen Schulungs-E-Handschweißbrenners sowie der erfindungsgemäßen Schulungs-Stabelektrode sind in den abhängigen Ansprüchen 20 bis 21 angegeben.

Die gegenständliche Erfindung wird nachfolgend unter Bezugnahme auf die Figuren 1 bis 10 näher erläutert, die beispielhaft, schematisch und nicht einschränkend vorteilhafte Ausgestaltungen der Erfindung zeigen. Dabei zeigt
Fig.1 einen erfindungsgemäßen Schulungs-E-Handschweißbrenner,
Fig.2 einen erfindungsgemäßen Schulungs-E-Handschweißbrenner mit Schulungs-Stabelektrode,
Fig.3 einen erfindungsgemäßen Schulungs-E-Handschweißbrenner mit mittels mechanischer Feder ausgeführte Rückstellvorrichtung,
Fig.4a-c eine Betätigungsabfolge des erfindungsgemäßen Schulungs-E-Handschweißbrenner,
Fig.5 einen in der Rückstellvorrichtung vorgesehenen Anschlag,
Fig.6 eine Ausführung einer Einziehvorrichtung in Form eines Getriebemotors,
Fig.7 eine Kabelführung zum Herausführen eines Signal-Kabels aus dem Schulungs-E-Handschweißbrenner,
Fig.8 Ausführung und Anordnung einer Schulungs-Stabelektrode,
Fig.9 eine Schulungs-Stabelektrode mit Links-Rechts-Erkennung,
Fig.10 eine Schweißschulungsanordnung zur Durchführung eines virtuellen Handschweißvorganges.

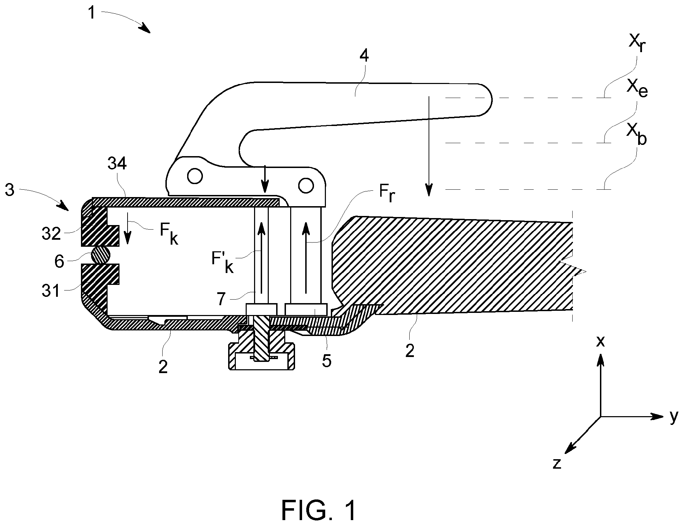

Fig.1 zeigt einen erfindungsgemäßen Schulungs-E-Handschweißbrenner 1, d.h. einen Simulationsbrenner für das E-Handschweißen. Der Schulungs-E-Handschweißbrenner 1 weist einen Handschweißbrenner-Grundkörper 2 sowie eine Klemmvorrichtung 3 zum Festklemmen einer Schulungs-Stabelektrode 6 mit einer vorgegebenen Klemmkraft Fₖ auf. In der Klemmvorrichtung 3 sind eine erste Klemmbacke 31 und eine zweite Klemmbacke 32 vorgesehen, sowie ein mit dem Handschweißbrenner-Grundkörper 2 mechanisch verbundener, manuell betätigbarer Klemmhebel 4 zum Betätigen zumindest einer der Klemmbacken 31 bzw. 32. Der Klemmhebel 4 ist am Handschweißbrenner-Grundkörper 2 gelagert, vorzugsweise drehbar. Zwischen dem Handschweißbrenner-Grundkörper 2 und dem Klemmhebel 4 ist weiters eine Rückstellvorrichtung 5 vorgesehen, die den Klemmhebel 4 ohne manuelle Betätigung in einer Rückstellposition xᵣ hält und eine auf den Klemmhebel 4 wirkende Rückstellkraft Fᵣ bereitstellt. Diese Rückstellkraft Fᵣ gilt es bei Verwendung des gezeigten Schulungs-E-Handschweißbrenners 1 manuell zu überwinden, wenn im Rahmen eines virtuellen Handschweißvorganges eine Schulungs-Stabelektrode 6 gelöst oder zwischen die Klemmbacken 31, 32 eingebracht werden soll.

Wie vorstehend erläutert, ist aus dem Stand der Technik bekannt, eine Schulungs-Stabelektrode 6 mittels eines geeigneten Antriebs zu bewegen, um ein, während eines virtuellen Handschweißvorganges auftretendes, virtuelles Abbrennen einer Schweißelektrode zu simulieren. Dazu können verschiedene Antriebskonzepte eingesetzt werden, worauf an späterer Stelle gesondert eingegangen wird, z.B. Elektromotoren oder Gleitvorrichtungen. In einer bevorzugten Weise werden zum Bewegen von Schulungs-Stabelektrode 6 Elektromotoren vorgesehen, wie insbesondere kleine, in einem Handschweißbrenner-Grundkörper 2 verbaubare Motoren. Als Motoren können im gegenständlichen Zusammenhang (DC- oder AC-) Servomotoren, Getriebemotoren, Piezoantriebe, Voice-Coil-Aktuator, (Mikro)-Druckluft- bzw. Hydraulikantriebe eingesetzt werden. Zur Umsetzung einer Gleitvorrichtung können Klemmbacken 31, 32 in Form geeigneter Gleitkörper ausgeführt werden, die eine gezielte, vorgegebene Haftreibung auf die Schulungs-Stabelektrode 6 ausüben, sodass erst nach Übersteigen einer vorgegebenen Kraft auf die Schulungs-Stabelektrode 6 die Haftreibung überwunden wird, und die Schulungs-Stabelektrode 6 zu gleiten beginnt.

Als Getriebemotor wird im gegenständlichen Zusammenhang eine Kombination aus einem Elektromotor mit einem geeigneten Getriebe verstanden, wobei sich für einen Einsatz in einem erfindungsgemäßen Schulungs-E-Handschweißbrenner 1 insbesondere Getriebe mit hohen Übersetzungen als vorteilhaft herausgestellt haben, vorzugsweise aufweisend eine Übersetzung von 500:1, oder 750:1, oder 1000:1 oder höher, um trotz kleiner Baugröße des Motors die zum Bewegen einer Schulungs-Stabelektrode 6 erforderlichen Kräfte aufbringen zu können.

Kleine und leistungsschwache Elektromotoren oder andere Einziehvorrichtungen, die in einem Schulungs-E-Handschweißbrenner 1 Platz finden, sind typischerweise, auch bei der Verwendung von Getrieben mit hohen Übersetzungen, nicht in der Lage, eine Schulungs-Stabelektrode 6 gegen einen mechanischen Widerstand zu bewegen, der sich bei einer im Realbetrieb üblichen Klemmung mit im Realbetrieb hohen Klemmkräften ergibt. Bei Gleitvorrichtungen besteht die Gefahr, dass eine Schulungs-Stabelektrode 6 bei zu starker Klemmung stecken bleibt. Um unnatürlich geringe Rückstellkräfte zu vermeiden, die man aus diesem Grund im Stand der Technik vorsieht und die Schweißschülern falsche Eindrücke hinsichtlich im Realbetrieb mit einem realen Handschweißbrenner zum Klemmen und Lösen von Stabelektroden aufzubringender Kräfte vermitteln, ist im Rahmen der gegenständlichen Erfindung vorgesehen, den in Fig.1 gezeigten Schulungs-E-Handschweißbrenner 1 derart auszugestalten, dass sich auf den Klemmhebel 4 wirkende Rückstellkräfte Fᵣ ergeben, die die zwischen den Klemmbacken 31, 32 auftretenden Klemmkräfte Fₖ übersteigen, vorzugsweise signifikant übersteigen.

In einer vorteilhaften Ausgestaltung der Erfindung kann in dieser Hinsicht vorgesehen werden, dass die Rückstellkraft Fᵣ die Klemmkraft Fₖ um einen vorgegebenen Faktor übersteigt, vorzugsweise um einen Faktor größer 2, oder um einen Faktor größer 3, oder um einen Faktor größer 5 oder um einen Faktor größer 10. Dass die Rückstellkraft Fᵣ die Klemmkraft Fₖ übersteigt, wird in einer vorteilhaften Weise stets, also dauerhaft, d.h. während des gesamten Betriebs eines erfindungsgemäßen Schulungs-E-Handschweißbrenners 1 sichergestellt, also unabhängig von einer konkreten Stellung des Klemmhebels 4.

Der erfindungsgemäße Schulungs-E-Handschweißbrenner 1 steht damit in einem klaren Unterschied zu aus dem Stand der Technik bekannten Handschweißbrennern, bei denen bewusst mitunter große Klemmkräfte vorgesehen werden, um eingesetzte Schweißelektroden möglichst fest zu klemmen und einen guten Stromübergang von den Klemmbacken auf die Schweißelektrode zu ermöglichen. Die bei üblichen Handschweißbrennern vorgesehenen Hebelmechanismen zur Übertragung von manuell auf einen Klemmhebel 4 aufgebrachten Kräfte in Klemmkräfte zum Klemmen von Elektroden sind zu diesem Zweck üblicherweise derart ausgestaltet, dass auf einen Klemmhebel aufgebrachte Kräfte verstärkt werden, sodass sich letztlich im Vergleich zu den auf den Klemmhebel 4 wirkenden Rückstellkräfte Fᵣ mitunter wesentlich größere Klemmkräfte Fₖ einstellen.

Durch die gegenständliche Erfindung kann eine reale Klemmung nachgestellt werden, bei der dennoch einerseits eine Einziehvorrichtung, vorzugsweise ein Getriebemotor oder ein Servomotor, zum Bewegen einer zwischen den Klemmbacken geklemmten Elektrode nur gering belastet wird, andererseits das Einspannen über eine zweite viel stärkere Kraft realitätsnah simuliert wird. Dieses Konzept bringt eine Reihe entscheidender Vorteile mit sich, auf die im Zuge der nachfolgenden Ausführungen eingegangen wird. Besonders vorteilhaft wirkt sich das erfindungsgemäße Konzept jedoch auf die Lebensdauer von Einziehvorrichtungen, insbesondere von Getriebemotoren und Servomotoren, aus.

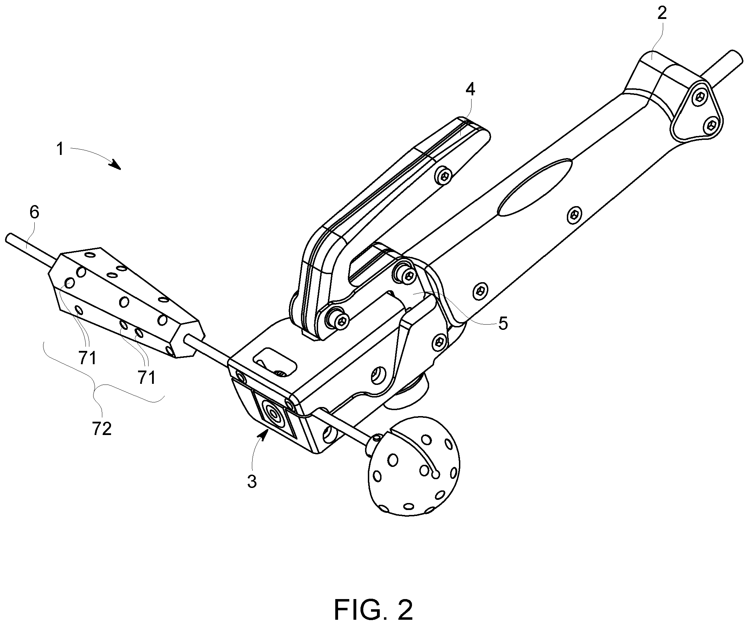

Wie mit einem der Darstellung aus Fig.1 entsprechenden Schulungs-E-Handschweißbrenner 1 eine Schulungs-Stabelektrode 6 gehalten werden kann, ist in Fig.2 dargestellt. Fig.2 zeigt dabei einen weiteren wichtigen Aspekt der Erfindung, konkret, dass an der Schulungs-Stabelektrode 6 eine erste Mehrzahl von IR-reflektierenden Referenzmarkern 71 angeordnet sein kann, in einem die Schulungs-Stabelektrode 6 individualisierenden ersten Referenzmuster 72, um die Schulungs-Stabelektrode 6 im Zuge eines virtuell durchgeführten Schulungs-Schweißvorganges mittels eines geeigneten Kamerasystems erfassen zu können. Auf diesen Aspekt, der vor allem bei der Durchführung von virtuellen Handschweißvorgängen von Bedeutung ist, wird an späterer Stelle gesondert eingegangen. Wie aus dem Stand der Technik bekannt ist, können individualisierende Marker-Muster auch direkt am Schulungs-E-Handschweißbrenner 1 selbst angebracht sein.

Zur Realisierung von erfindungsgemäß verschiedenen Rückstell- und Klemmkräften Fᵣ, Fₖ, sowie um sicherzustellen, dass Bewegungen des Klemmhebels 4 auch zu einer Bewegung zumindest einer der Klemmbacken 31, 32 führt, kann der Klemmhebel 4 zum Betätigen zumindest einer der Klemmbacken 31, 32 mit der zumindest einen Klemmbacke 31, 32 bewegungsverbunden sein, sodass im Fall einer durch manuelles Überwinden der Rückstellkraft F_{R} herbeigeführten Bewegung des Klemmhebels 4 von der Rückstellposition xᵣ in eine Betätigungsposition x_{b} des Klemmhebels 4 eine Bewegung der zumindest einen Klemmbacke 31, 32 von einer Klemmstellung in eine Öffnungsstellung der zumindest einen Klemmbacke 31, 32 herbeiführbar ist. Eine Schulungs-Stabelektrode 6 ist hierbei in der Klemmstellung der zumindest einen Klemmbacke 31, 32 mit der vorgegebenen Klemmkraft Fₖ klemmbar und in der Öffnungsstellung des Schulungs-E-Handschweißbrenners 1 lösbar. Bevorzugt kann hierzu eine mechanische Verbindungsvorrichtung 34 vorgesehen sein, die eine mechanische Bewegung des Klemmhebels 4 auf eine Bewegung der Klemmbacken 31, 32 überträgt. Dabei kann eine auf Seiten der Rückstelleinrichtung auftretende übersetzte Klemmkraft Fₖ' in die genannte Klemmkraft Fₖ übersetzt werden. In vorteilhafter Weise ergibt sich damit ein mechanischer Kraftschluss zwischen Klemmhebel 4 und Klemmbacken 31, 32.

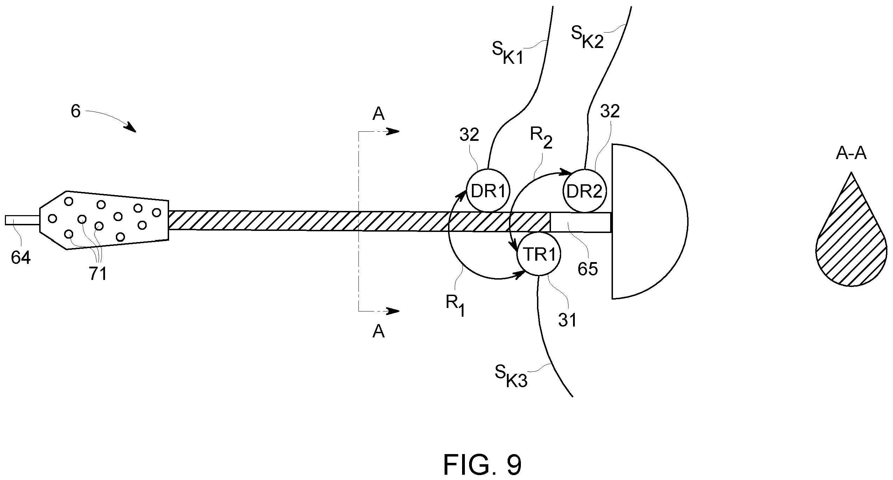

Anzumerken ist in diesem Zusammenhang, dass zur Bereitstellung einer eindeutig definierten mechanischen Einspannmöglichkeit durch die Klemmbacken 31, 32 zumindest drei Auflagepunkte bzw. Berührungspunkte vorsehbar sind. Im Fall einer Ausführung von Klemmbacken 31, 32, die jeweils eine Kontaktfläche, d.h. einen flächigen Kontakt, mit einer eingespannten Schulungs-Stabelektrode 6 aufweisen, ist dieses Kriterium aus offensichtlichen Gründen erfüllt. Wie an späterer Stelle näher erläutert wird, können die genannten drei Auflagepunkte auch durch Klemmbacken 31, 32 bereitgestellt werden, die in Form gegenüberliegender Rollen ausgeführt sind, wobei eine erste Klemmbacke 31 beispielsweise in Form zweier Drehrollen und eine zweite Klemmbacke 32 in Form einer einzelnen Triebrolle oder ebenso in Form zweier Triebrollen ausgeführt ist, oder indem eine Klemmbacke 31 als Triebrolle und die gegenüberliegende Klemmbacke 32 als Gleitfläche realisiert ist. Auf diesbezügliche Ausgestaltungsmöglichkeiten wird anhand von Fig.9 eingegangen.

Wie an späterer Stelle am Beispiel einer elektromagnetischen Betätigung erläutert, ist eine rein mechanische Ausführung jedoch nicht zwingend. Im Rahmen der Erfindung sind auch elektrische bzw. elektromagnetische Konzepte zur Realisierung einer Rückstelleinrichtung denkbar.

Wird jedoch auf eine mechanische Antriebsverbindung zwischen Klemmhebel 4 und zumindest einer Klemmbacke 31, 32 zurückgegriffen, ist es vorteilhaft, insbesondere die Rückstellvorrichtung 5 mittels einer oder mehrerer mechanischer Federn auszuführen.

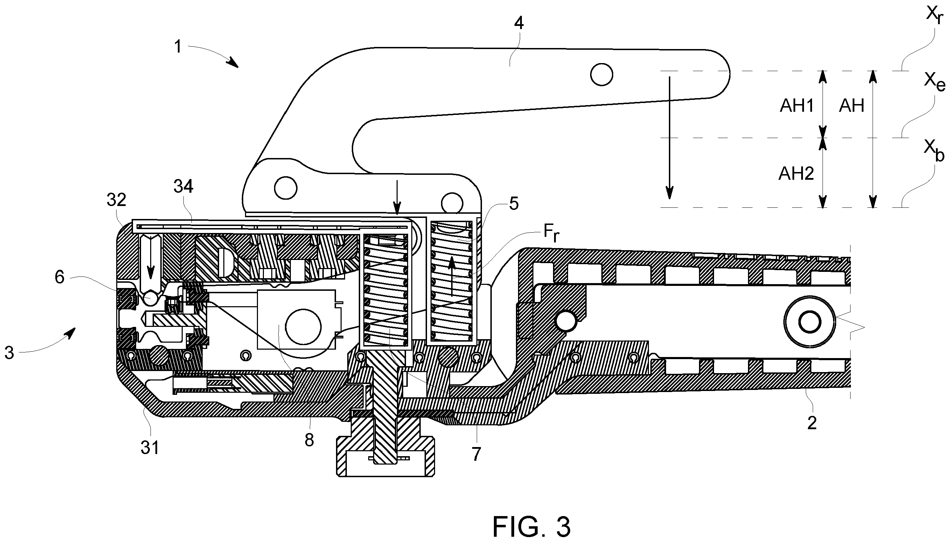

Fig.3 zeigt einen derartigen Schulungs-E-Handschweißbrenner mit einer mittels mechanischer Feder ausgeführten Rückstellvorrichtung 5. Die erste Klemmbacke 31 ist im dargestellten Fall ortsfest am Handschweißbrenner-Grundkörper 2 angeordnet und der Klemmhebel 4 ist mit der zweiten Klemmbacke 32 bewegungsverbunden, über eine vorstehend genannte Verbindungsvorrichtung 34, siehe oben. Die Rückstellvorrichtung 5 weist im in Fig.3 gezeigten Fall eine mechanische Feder auf, vorzugsweise eine Druckfeder oder eine Tellerfeder oder ein Evolutfeder oder eine Ringfeder oder eine Gasdruckfeder, mit einer vorgegebenen Rückstellfeder-Steifigkeit cᵣ zum Bereitstellen der auf den Klemmhebel 4 wirkenden Rückstellkraft Fᵣ.

Wie in Fig.3 ersichtlich ist, ist in den gezeigten Ausführungen des erfindungsgemäßen Schulungs-E-Handschweißbrenners 1 überdies ein Klemmmechanismus 7 vorgesehen, der ausgestaltet ist, die Klemmbacken 31, 32 mit der genannten Klemmkraft Fₖ zueinander zu drücken. Wie der Rückstellmechanismus kann auch der Klemmmechanismus 7 eine oder mehrere mechanische Klemmfeder aufweisen, vorzugsweise ebenso eine Druckfeder oder eine Tellerfeder oder ein Evolutfeder oder eine Ringfeder oder eine Gasdruckfeder, mit einer vorgegebenen Klemmfeder-Steifigkeit cₖ zum Bereitstellen der Klemmkraft Fₖ.

Um im Rahmen dieser Ausführung Rückstellkräfte Fᵣ zu realisieren, die die zwischen den Klemmbacken 31, 32 auftretenden Klemmkräfte Fₖ übersteigen, kann insbesondere die Rückstellfeder-Steifigkeit cᵣ um den vorgegebenen Faktor k größer gewählt werden als die Klemmfeder-Steifigkeit cₖ.

Wie erwähnt, kann die Rückstellvorrichtung 5 alternativ auch als elektromagnetischer Rückstellmechanismus zum Bereitstellen der auf den Klemmhebel 4 wirkenden Rückstellkraft Fᵣ ausgeführt sein. Selbes gilt für den Klemmmechanismus 7, der ebenso alternativ als elektromagnetischer Klemmmechanismus 7 ausgeführt sein kann. Als elektromagnetische Konzepte kommen beispielsweise bestrombare Drosseln in Frage, die ausgestaltet sind, einen mechanisch mit Klemmhebel 4 oder Klemmbacke 31, 32 verbundenen Eisenkern zu bewegen und damit die genannten Kräfte aufzubringen. Im Rahmen dieser Ausführungsform kann zur Bereitstellung von Rückstellkräften Fᵣ, die die zwischen den Klemmbacken 31, 32 auftretenden Klemmkräfte Fₖ übersteigen, die Bestromung der Drosseln angepasst werden.

Im Rahmen von Ausführungsformen, die auf elektromagnetische Konzepte zur Bereitstellung von Rückstellkraft Fᵣ und/oder Klemmkraft Fₖ zurückgreifen, kann der Klemmhebel 4 zum Betätigen der zumindest einen der Klemmbacken 31, 32 ausgestaltet sein, in der Betätigungsposition x_{b} ein elektrisches Schaltelement zu betätigen, z.B. einen Schalter oder einen Taster oder eine Kraftmessdose usw. Das Schaltelement kann in weiterer Folge den elektromagnetischer Klemmmechanismus 7 aktivieren und/oder deaktivieren, sodass in einem unbetätigtem Zustand ein Schließen des elektromagnetischen Klemmmechanismus 7 zum Klemmen einer Schulungs-Stabelektrode 6 herbeigeführt wird und in betätigtem Zustand ein Öffnen des elektromagnetischen Klemmmechanismus 7 zum Lösen einer Schulungs-Stabelektrode 6 herbeigeführt wird.

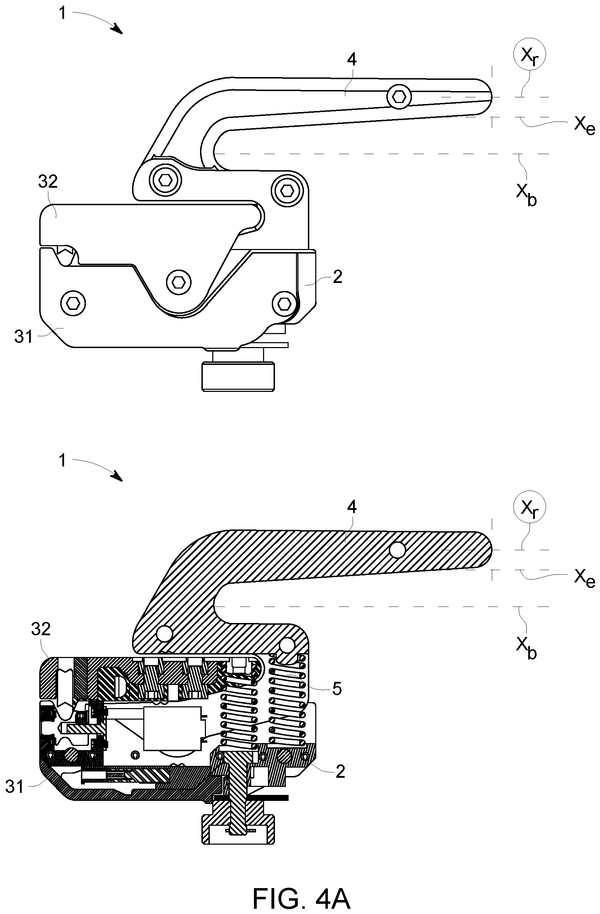

Während der Betätigung des Klemmhebels 4 zum Öffnen und/oder Schließen der Klemmbacken 31, 32 ergibt sich eine Betätigungsabfolge. Ein Beispiel für eine derartige Betätigungsabfolge ist in den Figuren 4a-4c dargestellt, aus der insbesondere hervorgeht, dass der Klemmhebel 4 gegen eine erste Feder betätigt wird, konkret eine Rückstellfeder mit einer Rückstellfeder-Steifigkeit cᵣ, die so gewählt ist, dass sich eine große Rückstellkraft F_{R} ergibt, die Klemmbacken demgegenüber von einer weicheren Klemmfeder zusammengehalten werden, um die erfindungsgemäß angestrebte geringe Klemmkraft Fₖ zu realisieren.

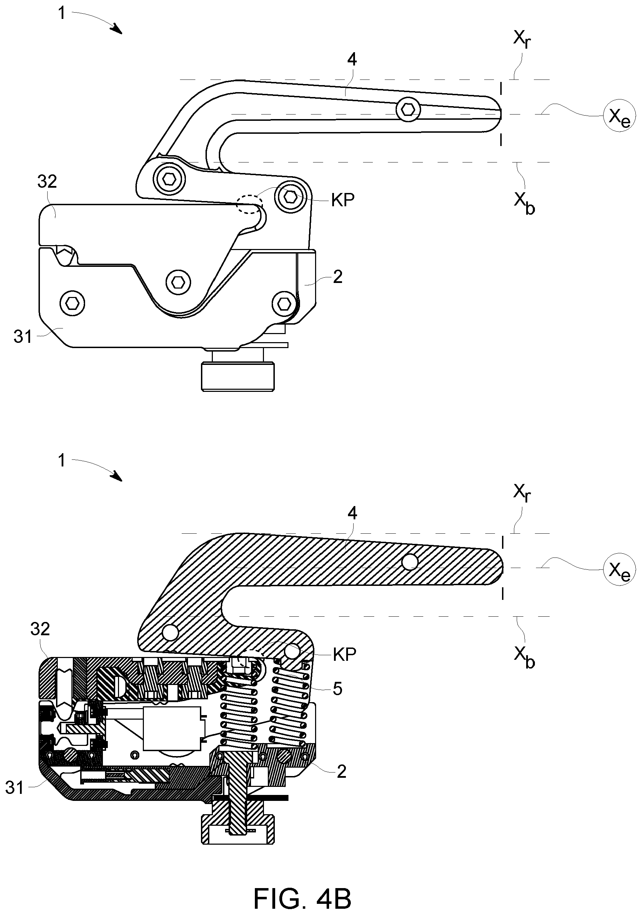

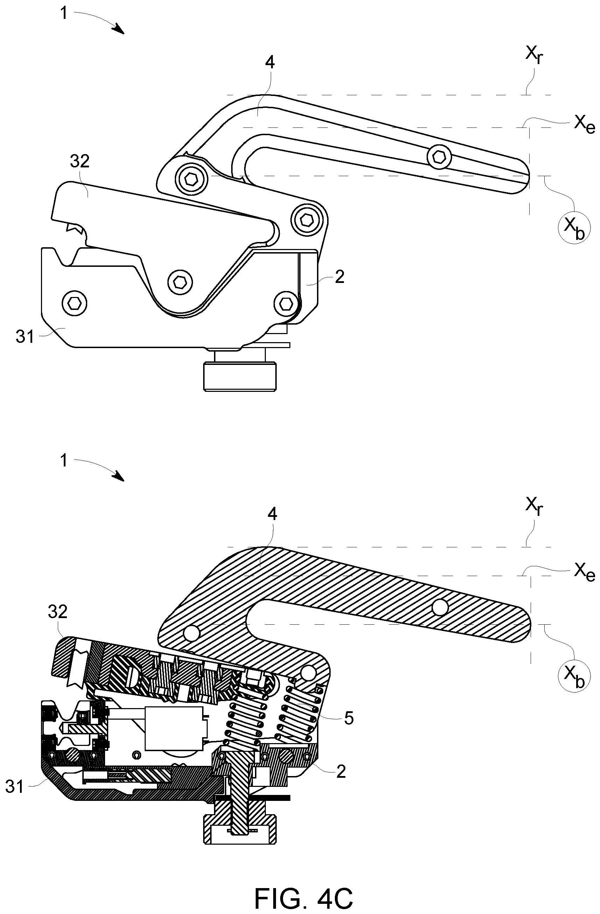

Aus den Figuren 4a-4c geht dabei eine weitere, besonders vorteilhafte Ausgestaltungsoption des erfindungsgemäßen Schulungs-E-Handschweißbrenners 1 hervor. Wie anhand der in den Figs.4 gezeigten Bewegungsabfolge erkannt werden kann, kann im Rahmen der Erfindung eine Gleichgewichtsstellung xₑ des Klemmhebels 4 vorgesehen sein, die einen Arbeitshub AH des Klemmhebels 4 zwischen der Rückstellposition xᵣ und der Betätigungsposition x_{b} in einen ersten Teilarbeitshub AH1, der zwischen der Rückstellposition xᵣ und der Gleichgewichtsstellung xₑ des Klemmhebels 4 angeordnet ist, sowie einen zweiten Teilarbeitshub AH2, der zwischen der Gleichgewichtsstellung xₑ und der Betätigungsposition x_{b} angeordnet ist, unterteilt. Der Klemmhebel 4 ist im Rahmen dieser Ausführung ausgestaltet, erst im zweiten Teilarbeitshub AH2 eine der Klemmbacken 31, 32 zum Öffnen und Schließen des Klemmmechanismus 7 zu betätigen und im ersten Teilarbeitshub AH1 keine der Klemmbacke 31, 32 zu betätigen. Im gegenständlichen Fall ergibt sich erst im zweiten Teilarbeitshub AH2 ein Kraftschluss zwischen Klemmhebel 4 und Verbindungsvorrichtung, sobald der Klemmhebel 4 in einem Kontaktpunkt KP in Kontakt / Eingriff mit der Verbindungsvorrichtung 34 gelangt.

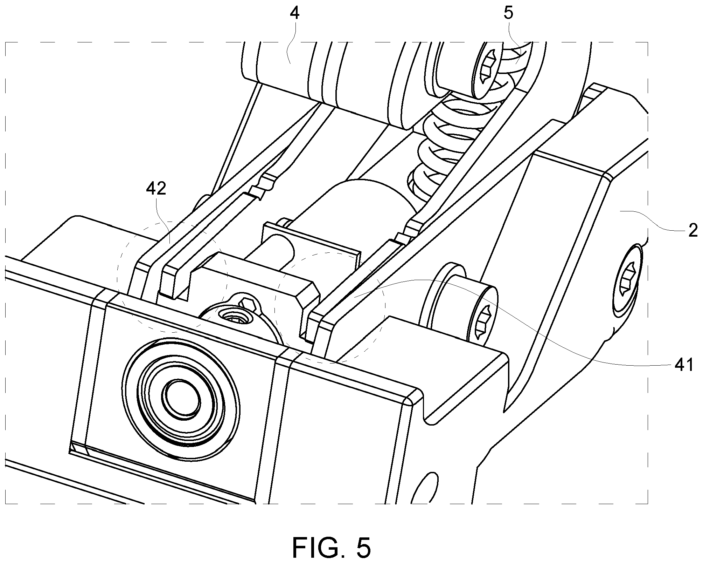

Zur mechanischen Umsetzung dieser Unterteilung des Arbeitshubes kann ein mechanischer Anschlag 41, 42 vorgesehen sein, wie in Fig.5 gezeigt. Bei Verwendung eines mechanischen Anschlags wie in Fig.5 dargestellt wird der Kraftschluss zwischen Klemmhebel 4 und Klemmbacken 31, 32 unterbrochen, sobald die mechanische Verbindungsvorrichtung 34 am mechanischen Anschlag anliegt.

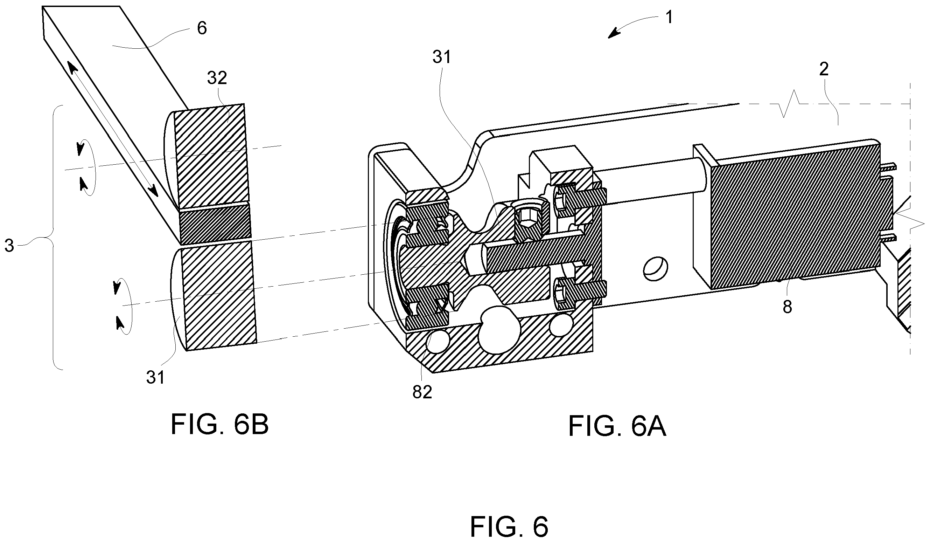

Anknüpfend an den gegenständlichen Ausführungen zugrunde liegenden Wunsch, auch im Rahmen von virtuellen Schweißvorgängen den Verbrauch einer abschmelzenden Elektrode realitätsnah nachstellen zu können, kann am Schulungs-E-Handschweißbrenner 1 wie erwähnt eine Stabelektroden-Einziehanordnung 8 vorgesehen sein, die ausgestaltet ist, eine Schulungs-Stabelektrode 6 relativ zu den Klemmbacken 31, 32 zu bewegen, um einen Verbrauch einer Simulationsstabelektrode während eines Schulungs-Schweißvorganges zu simulieren. Eine dementsprechende Ausführung einer Einziehvorrichtung in Form eines Getriebemotors ist bereits in Fig.3 dargestellt, in einem höheren Detaillierungsgrad allerdings in Fig.6 gezeigt, konkret in Fig.6a und Fig.6b. Fig.6a zeigt, wie ein Getriebemotor 8 eine als Triebrolle TR1 ausgeführte Klemmbacke 31 antreibt, um damit letztlich eine Schulungs-Stabelektrode 6 zu bewegen. Wie ein zum Übertragen einer Bewegung von einer als Triebrolle TR1 ausgeführten Klemmbacke 31 auf eine Schulungs-Stabelektrode 6 erforderlicher Kraftschluss ausgeführt sein kann, ist schematisch in Fig.6b dargestellt. Man erkennt, dass sich eine allfällige Rotation der Klemmbacke 31 auf die Schulungs-Stabelektrode 6 überträgt und die Schulungs-Stabelektrode 6 in Folge eine Linearbewegung ausführt. Wird auf einen elektrischen Getriebemotor als Stabelektroden-Einziehanordnung 8 zurückgegriffen, ist es vorteilhaft, wenn zumindest eine der Klemmbacken 31, 32 über eine mechanische Welle des Getriebemotors zum Bewegen einer Schulungs-Stabelektrode 6 rotiert wird, wie dies beispielsweise bereits aus Fig.3 hervorgeht.

In einer besonders vorteilhaften Weise ist der Getriebemotor 8 und folglich die Stabelektroden-Einziehanordnung 8 innerhalb des Handschweißbrenner-Grundkörpers 2 angeordnet, es ist aber ebenso denkbar, die Stabelektroden-Einziehanordnung 8 außerhalb des Handschweißbrenner-Grundkörpers 2 anzuordnen, beispielhaft durch eine Klemmung auf den Handschweißbrenner-Grundkörper 2.

Bei Verwendung eines Getriebemotors als Stabelektroden-Einziehanordnung 8 können in einer vorteilhaften Weise eine Reihe weiterer Komponenten vorgesehen werden, beispielsweise eine Triebrolle TR mit einem integrierten Kugellager 82, um den Getriebemotor vor übermäßiger radialer Belastung zu schützen. Auch kann eine ständige Motorstromüberwachung eingesetzt werden, um das Ende einer Schulungs-Stabelektrode 6 zu erkennen und ein Blockieren des Getriebemotors oder einen Kurzschluss von Motorleitungen zu erkennen. Damit ein erfindungsgemäßer Schulungs-E-Handschweißbrenner 1 von Rechts- und Linkshändern in gleicher Weise bedient werden kann, können in einer vorteilhaften Weise auch Motoren mit Drehrichtungsumkehr vorgesehen werden. Ferner besteht die Möglichkeit, am Schulungs-E-Handschweißbrenner 1 einen Schalter vorzusehen, welcher bei Betätigung die von der Scheißsimulationseinheit zum Getriebemotor verlaufenden Kabel umpolt um eine Drehrichtungsumkehr herbeizuführen. Eine derartige Umpolung kann auch in Software gelöst werden, beispielsweise in Software zur Bewegungsreglung des Motors, die insbesondere in einer Steuereinheit oder Simulationseinheit 9 implementiert sein kann.

Wie erwähnt ist die Verwendung einer motorisierten Stabelektroden-Einziehanordnung 8 allerdings keineswegs zwingend. Genauso kann im Rahmen der Erfindung eine Gleiteinheit als Stabelektroden-Einziehanordnung 8 eingesetzt werden, die eine Bewegung einer Schulungs-Stabelektrode 6 zulässt, wenn die Schulungs-Stabelektrode 6 beispielsweise gegen ein Schulungs-Werkstück gedrückt wird und sich über den Druck eine Kraft auf die Schulungs-Stabelektrode 6 ausbildet. Die Gleiteinheit wird in bevorzugter Weise zumindest teilweise von den Klemmbacken 31, 32 gebildet. Die Klemmbacken 31, 32 können in diesem Fall aus Teflon ("Teflonbacken") ausgeführt sein, und über Federkräfte auf die Schulungs-Stabelektrode 6 vorgespannt werden. Die Schulungs-Stabelektrode 6 kommt erst nach Überwindung der Haftreibung in eine Gleitbewegung, wie an früherer Stelle erläutert.

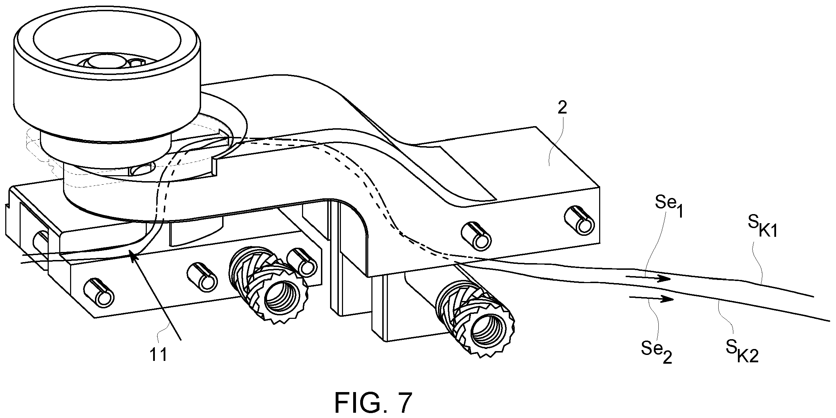

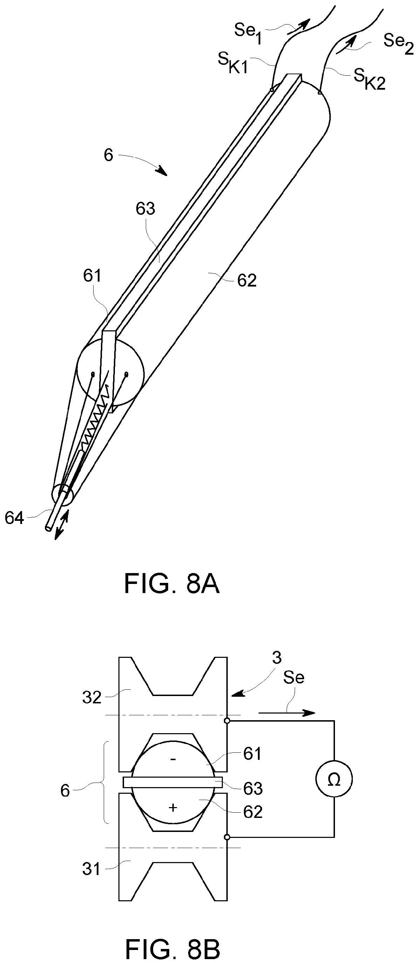

Eine weitere vorteilhafte Ausbildung der Erfindung ist in Fig.7 gezeigt, konkret als erfindungsgemäßer Schulungs-E-Handschweißbrenner 1, der um eine Kabelführung 11 zum Herausführen von Signal-Kabeln S_{K1}, S_{K2} aus dem Schulungs-E-Handschweißbrenner 1 erweitert ist. Im Fall einer Verwendung eines Elektromotors, wie insbesondere eines Getriebemotors, zum Bewegen der Schulungs-Stabelektrode 6, ist in den üblichen Fällen ohnehin eine Kabelführung vorgesehen, um die Kabel und Leitungen für die Motorversorgung durch den Schulungs-E-Handschweißbrenner 1 zum Motor zu führen. Die in Fig.7 gezeigte Kabelführung kann dann der Kabelführung für die Motorkabel entsprechen. Ist anstelle eines Elektromotors aber eine Gleiteinheit vorgesehen, kann eigens für die Signal-Kabel S_{K1}, S_{K2} eine eigene Kabelführung vorgesehen werden. Eine derartige Ergänzung erweist sich in Fällen als günstig, in denen die erste Klemmbacke 31 der Klemmbacken 31, 32 als erste Mess-Elektrode ausgeführt ist und/oder die zweite Klemmbacke 32 der Klemmbacken 31, 32 als zweite Mess-Elektrode ausgeführt ist, um eine Messung eines von einer Schulungs-Stabelektrode 6 an den Klemmbacken 31, 32 eingeprägten elektrischen Messsignales sₑ zu ermöglichen. Um über eine Schulungs-Stabelektrode 6 Signale an die Klemmbacken 31, 32 zu übermitteln, existieren vielfältige Möglichkeiten. Insbesondere kann eine Schulungs-Stabelektrode 6 mit vielfältigen Sensoren ausgestattet sein, deren Messsignale auf diese Weise weitergegeben und verarbeitet werden können. Eine Auswahl diesbezüglicher Möglichkeiten wird nachfolgend aufgegriffen. Konkret ist denkbar, dass in einer Spitze 64 einer Schulungs-Stabelektrode 6 ein Kraftsensor vorgesehen ist, oder ein Potentiometer mit einer Federvorspannung oder ein anderer, geeigneter Sensor. Wie in Fig.8a durch den Doppelpfeil neben der Spitze 64 angedeutet, kann die Spitze 64 in einer vorteilhaften Weise auch relativ zum Rest der Schulungs-Stabelektrode 6 beweglich ausgeführt sein, und beispielsweise durch eine mechanische Feder stabilisiert werden. Allgemein können Messprinzipien eingesetzt werden, in denen eine Widerstandänderung über die beiden Klemmbacken 31, 32 ausgegeben/ausgelesen wird. Im Fall einer beweglich ausgeführten Spitze 64 kann eine Bewegung der Spitze folglich auf eine Widerstandsänderung abgebildet werden, z.B. mittels eines geeigneten Potentiometers, und ein daraus gewonnenes Signal über die Klemmbacken 31, 32 ausgelesen werden.

Wie vorstehend erläutert, ist die Kernaufgabe des Schulungs-E-Handschweißbrenners 1 das Halten einer Schulungs-Stabelektrode 6 im Zuge eines virtuell durchgeführten Handschweißverfahrens. Eine Option zur vorteilhaften Ausgestaltung einer derartigen Schulungs-Stabelektrode 6 sind nachstehend anhand von Fig.8a und Fig.8b diskutiert.

Eine besonders vorteilhafte Ausgestaltung einer Schulungs-Stabelektrode 6 ergibt sich, indem die Schulungs-Stabelektrode 6 mit eckigem Querschnitt, wie insbesondere mit einem viereckigen Querschnitt ausgeführt wird. Auf diese Weise können Verdrehungen der Schulungs-Stabelektrode 6 vermieden werden. Auch andere Querschnitte, die überhaupt nur eine Orientierung zulassen, sind denkbar, d.h. Querschnitte mit nur einer Symmetrielinie, beispielsweise tropfenförmige Querschnitte, oder drachenförmige Querschnitte. Eine mögliche Ausgestaltung eines tropfenförmigen Querschnitts, wie er sich beispielsweise entlang der Schnittlinie A-A ausbilden kann, ist in schematischer Weise ebenso in Fig.9 dargestellt.

Eine dahingehende, weitere und besonders vorteilhafte Anordnung einer Schulungs-Stabelektrode 6 sowie von Klemmbacken 31, 32, die den vorstehend angesprochenen Aspekt von Klemmbacken 31, 32 in Form von Triebrollen zur Bereitstellung von zumindest drei Auflage- bzw. Berührungspunkten sowie den Aspekt der Verwendung von Querschnitten einer Schulungs-Stabelektrode 6 mit nur einer Symmetrielinie vereint, ist in Fig.9 gezeigt. In der Ausführung nach Fig.9 realisieren die Klemmbacken 31, 32 drei Berührpunkte zur Schulungs-Stabelektrode 6, wobei die zweite Klemmbacke 32 zwei Drehrollen DR1, DR2 realisiert und die erste Klemmbacke 31 eine Triebrolle TR1. Die Triebrolle TR1 kann von einem vorstehend eingehend erläuterten Getriebemotor angetrieben werden, um die Schulungs-Stabelektrode 6 zu bewegen.

Die in Fig.9 gezeigte Anordnung eröffnet überdies die Möglichkeit, eine Links-Rechtserkennung vorzunehmen. Im gezeigten Fall ist zu diesem Zweck an der Schulungs-Stabelektrode 6 ein (optionaler) elektrisch isolierter Abschnitt 65 vorgesehen, der im gezeigten Fall zwischen der Triebrolle TR1 und der rechten Drehrolle DR2 angeordnet ist. Es ist offensichtlich, dass Widerstandsmessungen zu gänzlich unterschiedlichen Ergebnissen gelangen, die den Widerstand R1 zwischen der Triebrolle TR1 und der Drehrolle DR1 (nahezu Kurzschluss) bzw. den Widerstand R2 zwischen der Triebrolle TR1 und der Drehrolle DR2 (nahezu Leerlauf) messen. Eine Steuerung kann in diesem Fall diese Übergangswiderstände R1, R2 überwachen. Anhand der Einspannposition und der demnach entweder links oder rechts gemessenen, großen bzw. kleinen Widerstandswerte ist in weiterer Folge erkennbar, ob ein Rechts- oder Linkshänder schweißt und welche Einziehrichtung demnach im Betrieb erforderlich ist. In einer besonders vorteilhaften Weise kann hierbei die elektrische Leitfähigkeit des Schulungs-Stabelektrode 6 nicht nur konstant ausgeführt werden, d.h. mit einem leitenden Abschnitt und mit einem isolierenden Abschnitt, sondern stattdessen z.B. linear ansteigend, sodass anhand der Werte R1 und R2 sogar eine exakte Bestimmung der Position der Triebrolle TR1 in Bezug z.B. zu einer Elektrodenspitze 64 möglich wird.

Dabei ist zunächst eine Schulungs-Stabelektrode 6 zur Verwendung in einem erfindungsgemäßen Schulungs-E-Handschweißbrenner 1 gezeigt, welche eine erste sich entlang einer Längsachse der Schulungs-Stabelektrode 6 erstreckende Längs-Elektrode aufweist, im gezeigten Fall konkret in Form zweier voneinander isolierte Halbschalen, sowie eine zweite sich entlang der Längsachse der Schulungs-Stabelektrode 6 erstreckende Längs-Elektrode, und eine zwischen den Längs-Elektroden angeordnete isolierende Schicht, sodass eine erste Klemmbacke 31 der Klemmbacken 31, 32 des Schulungs-E-Handschweißbrenners 1 nach einem der Ansprüche 1 bis 15 von der ersten Längs-Elektrode kontaktierbar ist und eine zweite Klemmbacke 32 der Klemmbacken 31, 32 des Schulungs-E-Handschweißbrenner 1 nach einem der Ansprüche 1 bis 15 von der zweiten Längs-Elektrode kontaktierbar ist, um ein veränderliches elektrisches Messsignal sₑ an den Klemmbacken 31, 32 einzuprägen.

In einer besonders vorteilhaften Ausführung kann hierbei an zumindest einem axialen Ende der Längsachse der Schulungs-Stabelektrode 6 eine Kraftmessdose zur Generierung eines an den Klemmbacken 31, 32 einprägbaren elektrischen Messsignales sₑ vorgesehen sein. Die Verwendung einer Kraftmessdose an einer Spitze 64 einer Schulungs-Stabelektrode 6 ist für die Durchführung von virtuellen Schweißvorgängen vorteilhaft, da auf diese Weise erkannt werden kann, ob eine Schulungs-Stabelektrode 6 ein Schulungs-Werkstück berührt oder nicht, oder ob ein vom Bediener beim simulierten Schweißen ausgeübter Druck einem vorgegebenen Druck entspricht. Über die axialen Längselektroden kann ein beispielsweise mittels Kraftmessdose erzeugtes Messsignal zum Schulungs-E-Handschweißbrenner 1 rückgeführt werden, dort über als Mess-Elektroden ausgeführte Klemmbacken 31, 32 abgegriffen werden und über an die Klemmbacken angeschlossene Mess-Kabel durch eine geeignete Kabelführung 11 weggeführt werden, beispielsweise zu einer Steuereinheit oder einer Recheneinheit oder einer CPU. Neben einer Kraftmessdose sind als Sensoren Abstandsensoren, Magnetfeldsensoren, Hallsensoren, Temperatursensoren zur Temperaturmessung eines beheizten Werkstücks, Wegsensoren, oder ein mit einer Feder vorgespanntes Potentiometer usw. denkbar. Ebenso ist denkbar, dass ein Schulungs-Werkstück selbst mit Sensoren bestückt ist (z.B. Flächensensoren, die auf Berührung reagieren), oder dass ein Schweißtisch, auf dem ein Schulungs-Werkstück 40 angeordnet sein kann, Sensoren aufweist, Berührungen detektiert, und einer Steuereinheit zum Simulieren eines Schweißvorganges zur Verfügung stellt. Auch im Brennergehäuse kann ein Kraftsensor vorhanden sein, um Berührungen zu detektieren.

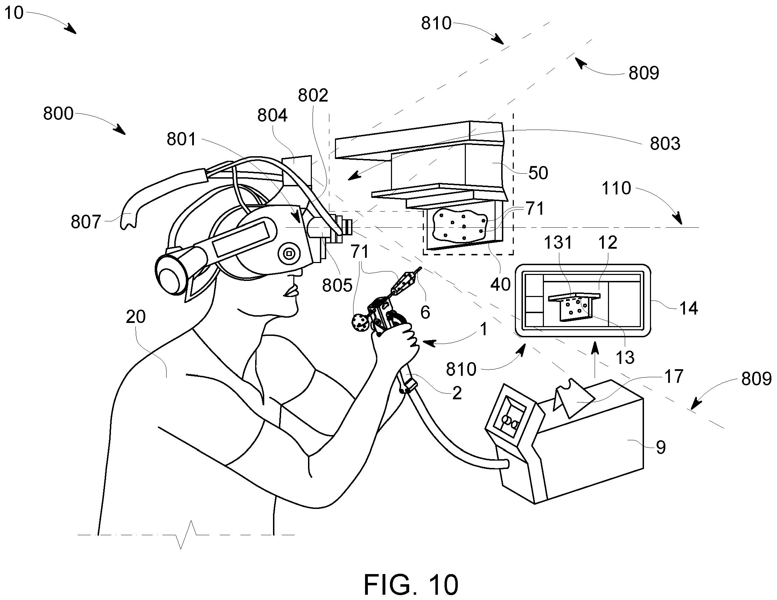

Fig.10 zeigt eine mögliche Ausgestaltung einer Schweißschulungsanordnung 10 zur Durchführung eines virtuellen Handschweißvorganges, in der der erfindungsgemäße Schulungs-E-Handschweißbrenner 1 in einer besonders vorteilhaften Weise eingesetzt werden kann. Die Grundbestandteile der Schweißschulungsanordnung 10 sind ein Schulungs-Werkstück 40, ein manuell bewegbarer Schulungs-E-Handschweißbrenner 1, ein Mixed-Reality-Headset 800 und eine Simulationseinheit 9.

Unter Mixed-Reality ("vermischte Realität" oder "gemischte Realität") wird im gegenständlichen Zusammenhang die Vermischung der natürlichen Wahrnehmung eines Handschwei-ßers 20 mit einer künstlich erzeugten ("computererzeugten") Wahrnehmung verstanden. Die natürliche Wahrnehmung eines Handschweißers 20 wird im Rahmen der in Fig.10 gezeigten Schweißschulungsanordnung 10 anhand eines Kamerasystems 803 erfasst und durch von dem Kamerasystem 803 erzeugte Kamera-Bilder repräsentiert. Die Kamerasystem 803 ist am Mixed-Reality-Headset 800 angeordnet und erlaubt es, Bilder von sich im Sichtfeld des Kamerasystems 803, nachfolgend "Kamera-Sichtfeld" 809, befindenden Objekten zu erfassen. Dem gezeigten Mixed-Reality-Headset 800 ist weiters ein vorgegebener geometrischer Headset-Bezugspunkt 802 zugeordnet. Daraus ergibt sich ein bewegliches, im Zuge des virtuellen Handschweißvorganges veränderliches Koordinatensystem, welches zur Beschreibung der Raumlagen des Schulungs-Werkstücks 40 und des Schulungs-E-Handschweißbrenners 1 herangezogen wird. Ein Mixed-Reality-Headset 800 fasst die z.B. am Kamerasystem 803 angeschlossenen Kabel in der Regel zu einem Kabelstrang 807 zusammen. Hier kann auch ein Gewichts-Ausgleichselement vorgesehen sein, um den Tragekomfort für einen Handschweißer 20 zu erhöhen.

Die Simulationseinheit 9 fungiert als CPU bzw. Recheneinheit der gezeigten Schweißschulungsanordnung 10. Wie eine CPU und damit eine Simulationseinheit 9 einer Schweißschulungsanordnung 10 aufgebaut werden kann, kann mehreren Dokumenten des Stands der Technik entnommen werden. Konkret bieten beispielsweise die EP 2 863 376 A1, die US 202/0265750 A1 oder auch die WO 2020/167812 A1 dahingehende Erläuterungen.

Wie z.B. aus WO 2023/242147 A1 bekannt ist, kann eine Simulationseinheit 9 auch in einem realen Schweißgerät (in Fachkreisen auch als "Schweißstromquelle" oder "Stromquelle" bezeichnet) integriert sein, an welches ein Schulungs-E-Handschweißbrenner 1 wie ein herkömmlicher, realer Schweißbrenner angeschlossen werden kann. Hierbei können insbesondere die an einem realen Schweißgerät bzw. an dessen Gehäuse vorgesehenen Schnittstellen, z.B. Anschlüsse zum Anschließen eines realen Handschweißbrenners, auch bei der Durchführung eines virtuellen Schweißvorganges unverändert eingesetzt werden. Im Fall einer Durchführung eines virtuellen Schweißvorganges mittels einer in einem realen Schweißgerät integrierten Simulationseinheit 9 wird die Leistungsversorgung durch das reale Schweißgerät, z.B. an den Schulungs-E-Handschweißbrenner 1, deaktiviert.

Zur Anordnung des Schulungs-Werkstücks 40 ist in der in Fig.10 gezeigten Ausführungsform eine Werkstückhalterung 50 vorgesehen, an der das Schulungs-Werkstück 40 montierbar ist. Mithilfe einer Werkstückhalterung 50 können insbesondere verschiedenste sogenannte Schweißpositionen simuliert werden. Bekanntermaßen beschreiben Schweißpositionen die Lage und/oder Ausrichtung einer Schweißnaht im Zuge eines Schweißvorgangs. Diesbezüglich definiert die Norm DIN EN ISO 6947 oder der ASME code Section IX (QW-120) eine Reihe von möglichen Schweißpositionen, wie PA (Waagerechtes Schweißen von Stumpf- und Kehlnähten), PB (Horizontales Schweißen von Kehlnähten, Horizontal-Vertikalposition) oder PC (Querposition bzw. Quernaht, waagrechtes Schweißen an senkrechter Wand). Vor allem beim Schweißen senkrechter Schweißnähte können hierbei erschwerende Effekte eintreten, wie das Nach-Unten-Fließen von Schmelze, was im Rahmen der gegenständlichen Erfindung ebenso berücksichtigt und als Teil des virtuellen Handschweißvorganges dargestellt werden kann.

Das anhand der Grundbestandteile Schulungs-Werkstück 40, Schulungs-E-Handschweißbrenner 1, Mixed-Reality-Headset 800 und Simulationseinheit 9 umgesetzte Prinzip zur Schulung von Handschweißern 20 sieht vor, durch manuelle Bewegung des Schulungs-E-Handschweißbrenners 1 eine virtuelle Schweißnaht 13 am Schulungs-Werkstück 40 zu erzeugen, mit dem Ziel einer möglichst exakten Nachbildung einer vorgebebenen Ideal-Schweißnaht 131 (bzgl. näherer Details siehe auch hier WO 2023/242147 A1), und die virtuelle Schweißnaht 13 gemeinsam mit dem Schulungs-Werkstück 40 dem Handschweißer 2 anzuzeigen. Die virtuelle Schweißnaht 13 existiert dabei nicht real, sondern wird durch Simulation eines realen Schweißvorganges unter Vorgabe von Bewegungsdaten des Schulungs-E-Handschweißbrenners 1 und des Schulungs-Werkstücks 40 ermittelt. Zur Visualisierung wird die virtuelle Schweißnaht 13 als Teil einer Sequenz von Mixed-Reality-Bildern 12 des virtuellen Handschweißvorganges an einem Mixed-Reality-Display 801, welches am Mixed-Reality-Headset 800 angeordnet ist, angezeigt.

Wie in Fig.10 dargestellt, kann das Mixed-Reality-Bild 12 auch an einem zusätzlichen Anzeigeelement 14 dargestellt werden. Das ermöglicht es beispielsweise einem Ausbildner, die virtuelle Schweißung zu beobachten. Ferner weist die gezeigte Schweißschulungsanordnung 10 eine Brennerhalterung 17 auf, an der insbesondere der erfindungsgemäße Schulungs-E-Handschweißbrenner 1 abgelegt werden kann. Eine Brennerhalterung 17 stellt allerdings keinen zwingenden Bestandteil einer erfindungsgemäßen Schweißschulungsanordnung 10 dar.

Um die an einer Schweißschulungsanordnung 10 erzielten Eindrücke einer realen Schweißsituation möglichst ähnlich zu gestalten, können während des virtuellen Schweißens vom Handschweißer 20 auch Schweiß-Handschuhe und/oder Schutzausrüstung getragen werden, wodurch auch hinsichtlich der vom Handschweißer 20 zu tragenden Kleidung ein hoher Übereinstimmungsgrad zwischen realem und virtuellem Schweißen erreicht wird.

In einer bevorzugten Ausgestaltung können am Schulungs-E-Handschweißbrenner 1 wie auf einem realen Handschweißbrenner Bedienelemente wie Schalter, Taster, Schieberegler usw., vorgesehen sein. Bei realen Handschweißbrennern werden derartige Bedienelemente dazu herangezogen, um einen Schweißvorgang zu steuern, beispielsweise zu beginnen, also z.B. einen Lichtbogen zu zünden, oder eine Schweißstromstärke zu variieren, oder um eine Drahtvorschubgeschwindigkeit zu verändern. Bevorzugterweise kann ein Schulungs-E-Handschweißbrenners 1 über die gleichen Bedienelemente verfügen und beispielsweise mithilfe einer Kabelverbindung durch diese Bedienelemente erzeugten Steuersignale an die Simulationseinheit 9 weitergeben.

In der Simulationseinheit 9 kann die Wirkung dieser Steuersignale in der Folge in der Simulation des Handschweißvorganges berücksichtigt werden, also die simulierte Schweißung begonnen oder unterbrochen werden, und vor allem ein simuliertes Abschmelzen beschleunigt oder verlangsamt werden oder ein simulierter Schweißstrom erhöht oder reduziert werden.

Insbesondere ist die Förderung der Schulungs-Stabelektrode 6 mit einer variablen Geschwindigkeit möglich. Im Stand der Technik ist bislang lediglich die Verwendung konstanter Geschwindigkeit der Schulungs-Stabelektrode 6 vorgesehen, was es insbesondere nicht erlaubt, Geschwindigkeitsänderungen in Abhängigkeit von eingestellten Parametern wie Elektrodendurchmesser, Material (basisch / rutil), Stromstärke usw. vorzusehen. Derartige Ansätze sind im Rahmen des gegenständlichen, erfindungsgemäßen Schulungs-E-Handschweißbrenners 1 möglich.

Bei der Verwendung von Rutil-Elektroden und/oder Basisch-Elektroden gilt es, den jeweiligen Elektroden eine entsprechende, korrekte Polarität zuzuweisen. Dafür ist es nötig, Kabel (Schweißkabel, Massekabel) zur Versorgung der Elektroden an eine korrekte Polarität anzuschließen. Im Rahmen der gegenständlich beschriebenen Schweißschulungsanordnung 10 besteht in diesem Zusammenhang die Möglichkeit, im Fall einer Erkennung eines falschen Anschlusses einen Hinweis am Display auszugeben, beispielsweise dass eine falsche Polarität verwendet wird, oder dass im Fall einer Durchführung der simulierten Schweißung mit der falschen Polarität die simulierte Schweißung eine unbrauchbare Qualität aufweisen wird.

Wird ein Elektromotor, wie ein Getriebemotor oder ein Servomotor, zur Bewegung der Schulungs-Stabelektrode 6 verwendet, so können die in solchen Ausgestaltungen typischerweise zur Verfügung stehenden Motordaten zu einer Vielzahl von Berechnungen herangezogen werden. Beispielsweise kann aus einem Drehzahlverlauf oder aus einer Anzahl an vorgenommenen Rotationen oder aus einem zurückgelegten Weg ermittelt werden, wie viel von der Schulungs-Stabelektrode 6 bereits gefördert wurde und wo man demnach im simulierten Schweißprozess steht. Beispielsweise kann so erkannt werden, dass sich bei einem dem simulierten Schweißprozess entsprechenden, realen Schweißprozess, an der Schulungs-Stabelektrode 6 Schlacke gebildet hätte, die es abzuklopfen gilt. Vom Bediener bzw. Schweißschüler kann dann verlangt werden, dass er den Schulungs-E-Handschweißbrenner 1 und die Schulungs-Stabelektrode 6 auf harten Untergrund klopft, z.B. auf einen bei der Schweißsimulation eingesetzten Schweißtisch, um auch ein Abklopfen von Schlacke zu simulieren.

Um ein möglichst realitätsnahes Abschmelzen der Schulungs-Stabelektrode 6 auf Basis vorgegebener Parameter nachzustellen, können überdies Kennlinien in der Simulationseinheit 9 hinterlegt werden, die die Elektrode dann mit der "realen" Abschmelzleistung bewegen lassen. Insbesondere Parameter wie Elektrodendurchmesser, Materialparameter eines geschweißten Werkstücks, Schweißparameter usw. können hierbei berücksichtigt werden. Um einer gegebenenfalls a priori unbekannten Schulungs-Stabelektrode 6 korrekte Materialparameter zuzuordnen, können verschiedene moderne Detektions- bzw. Identifikations-Methoden eingesetzt werden, beispielsweise können auf der Schulungs-Stabelektrode 6 RFID-Tags vorgesehen sein, die gescannt und erkannt werden und die in der Schweißsimulation zu einer korrekten Zuordnung von (Material-)Parametern zu einer identifizierten Schulungs-Stabelektrode 6 führen. Auch kann eine Erkennung der Schulungs-Stabelektrode 6 durch eine Detektion eines Spanndurchmessers der Schulungs-Stabelektrode 6 erfolgen, was durch geeignete Messung eines Abstandes zwischen den Klemmbacken 31, 32 erfolgen kann.

Wie bei realen Schweißvorgängen, kann auch in der gegenständlich betrachteten Schweißschulungsanordnung 10 eine Masseklemme vorgesehen werden. Eine Masseklemme wird bei realen Schweißvorgängen an einem zu schweißenden Werkstück angeklemmt und sorgt für einen geschlossenen Stromkreis. Zum Zweck einer Simulation, die auch Masseklemmen miteinbezieht und überprüft, ob diese vom Schweißschüler korrekt angeschlossen werden, kann in einer Masseklemme ein Sensor vorgesehen werden, sodass geprüft werden kann, ob die Masseklemme korrekt geklemmt ist. Auch hier können RFID-Tags vorgesehen werden, oder es kann detektiert werden, ob ein Backenabstand zwischen Klemmbacken der Masseklemme einen vorgegebenen Abstand aufweist usw. Ferner kann detektiert werden, ob die Masseklemme wirklich am Schulungs-Werkstück oder an einem mit dem Schulungs-Werkstück elektrisch verbundenen Bauteil geklemmt ist. Ist die Masseleitung nicht oder an einer falschen Stelle geklemmt (keine oder keine gute elektrische Verbindung), kann wie im Fall einer falschen Polarität eine Warnung oder Fehlermeldung ausgegeben, d.h. z.B. am Display angezeigt, werden.

Bezugnehmend auf die vorstehend erläuterten, individualisierende Gestaltung der Referenzmarker 71 ist anzumerken, dass zur Erfassung dieser Referenzmarker beispielsweise auch verschiedene Kameratypen kombiniert werden könne, z.B. RGB-Kameras 805 und IR-Kameras 804. Die RGB-Kamera kann hierbei bevorzugt das normale Sichtfeld des Handschweißers 20 erfassen, während die IR-Kamera die IR-Marker erfasst. Auf diese Weise wird insbesondere eine fehlerfreie Durchführung von virtuellen Handschweißvorgängen sogar noch möglich, wenn sich das Kamerasystems 803 so nahe am Schulungs-Werkstück 40 befindet, dass es zur Berührung von z.B. der RGB-Kamera mit dem Schulungs-Werkstück 40 kommt.

Die Verwendung eines erfindungsgemäßen Schulungs-E-Handschweißbrenners 1 mit einer Schulungs-Stabelektrode 6 mit Kraftmessdose an einer ihrer Spitzen 64 erlaubt es in diesem Zusammenhang insbesondere, eine Zündung eines virtuellen Lichtbogens nicht nur oder ausschließlich über das Tracking der Schulungs-Stabelektrode 6 zu zünden, sondern eine haptische Interaktion der Schulungs-Stabelektrode 6 mit dem Schulungs-Werkstück 40 zu detektieren und z.B. alleine auf Basis einer detektierten Interaktion den Lichtbogen zu starten. Auch die sogenannte "Zündkraft" kann auf diese Weise simuliert werden, was im bekannten Stand der Technik bislang nicht möglich ist. Die Zündkraft ist dabei in der Realität eine Kraft, die eine Schweißelektrode von einem zu schweißenden Werkstück zurückdrückt. Die Zündkraft ergibt sich bekanntermaßen aus dem sogenannten Lichtbogendruck, einer elektromagnetischen Rückstellkraft, die aus dem Zusammenwirken des Lichtbogens mit dem ihm umgebenden magnetischen Feld entsteht. Mit zunehmender Stromstärke verstärkt sich das vorhandene magnetische Feld in der Lichtbogensäule. Die Kraftwirkung steigt quadratisch zur Stromstärke. Hierbei gilt, dass sich insbesondere kurze Lichtbögen durch einen hohen Lichtbogendruck und eine hohe Energiedichte auszeichnen und bei langen Lichtbögen geringere Lichtbogendrücke auftreten. Der Lichtbogendruck beträgt in der Regel ca. 3 Newton. Auch diese Phänomene können durch die beschriebene Schweißschulungsanordnung 10 mit hoher Präzision nachgestellt werden.

## Patentansprüche

1. Schulungs-E-Handschweißbrenner (1) für eine Schweißschulungsanordnung (10) zur Durchführung eines virtuellen Handschweißvorganges, aufweisend
- einen Handschweißbrenner-Grundkörper (2),
- eine Klemmvorrichtung (3) zum Festklemmen einer Schulungs-Stabelektrode (6) mit einer vorgegebenen Klemmkraft (Fₖ), die Klemmvorrichtung (3) aufweisend
∘ eine erste Klemmbacke (31) und eine zweite Klemmbacke (32),
∘ einen am Handschweißbrenner-Grundkörper (2), vorzugsweise drehbar, gelagerten und manuell betätigbaren Klemmhebel (4) zum Betätigen zumindest einer der Klemmbacken (31, 32),
∘ eine zwischen dem Handschweißbrenner-Grundkörper (2) und dem Klemmhebel (4) angeordnete Rückstellvorrichtung (5), die den Klemmhebel (4) ohne manuelle Betätigung in einer Rückstellposition (xᵣ) hält und eine auf den Klemmhebel (4) wirkende Rückstellkraft (Fᵣ) bereitstellt,
**dadurch gekennzeichnet, dass** die Rückstellkraft (Fᵣ) größer ist als die Klemmkraft (Fₖ).

2. Schulungs-E-Handschweißbrenner (1) nach Anspruch 1, **dadurch gekennzeichnet, dass** die Rückstellkraft (Fᵣ) die Klemmkraft (Fₖ) um einen vorgegebenen Faktor übersteigt, wobei der vorgegebene Faktor größer ist als ein Faktor 2 oder größer ist als ein Faktor 3 oder größer ist als ein Faktor 5 oder größer ist als ein Faktor 10.

3. Schulungs-E-Handschweißbrenner (1) nach Anspruch 1 oder 2, **dadurch gekennzeichnet, dass** der Klemmhebel (4) zum Betätigen zumindest einer der Klemmbacken (31, 32) mit zumindest einer der Klemmbacken (31, 32) derart bewegungsverbunden ist, dass im Fall einer durch manuelles Überwinden der Rückstellkraft (F_{R}) herbeigeführten Bewegung des Klemmhebels (4) von der Rückstellposition (xᵣ) in eine Betätigungsposition (x_{b}) des Klemmhebels (4) eine Bewegung der zumindest einen Klemmbacke (31, 32) von einer Klemmstellung in eine Öffnungsstellung herbeiführbar ist, wobei eine Schulungs-Stabelektrode (6) in der Klemmstellung der zumindest einen Klemmbacke (31, 32) mit der vorgegebenen Klemmkraft (Fₖ) klemmbar ist und in der Öffnungsstellung vom Schulungs-E-Handschweißbrenner (1) lösbar ist.

4. Schulungs-E-Handschweißbrenner (1) nach Anspruch 3, **dadurch gekennzeichnet, dass** die erste Klemmbacke (31) ortsfest am Handschweißbrenner-Grundkörper (2) angeordnet ist und der Klemmhebel (4) mit der zweiten Klemmbacke (32) bewegungsverbunden ist.

5. Schulungs-E-Handschweißbrenner (1) nach einem der vorhergehenden Ansprüche, **dadurch gekennzeichnet, dass** die Rückstellvorrichtung (5) eine mechanische Feder, vorzugsweise eine Druckfeder oder eine Tellerfeder oder ein Evolutfeder oder eine Ringfeder oder eine Gasdruckfeder, mit einer vorgegebenen Rückstellfeder-Steifigkeit (cᵣ) zum Bereitstellen der auf den Klemmhebel (4) wirkenden Rückstellkraft (Fr) aufweist.

6. Schulungs-E-Handschweißbrenner (1) nach einem der Ansprüche 1 bis 4, **dadurch gekennzeichnet, dass** die Rückstellvorrichtung (5) als elektromagnetischer Rückstellmechanismus zum Bereitstellen der auf den Klemmhebel (4) wirkenden Rückstellkraft (Fr) ausgeführt ist.

7. Schulungs-E-Handschweißbrenner (1) nach einem der vorhergehenden Ansprüche, **dadurch gekennzeichnet, dass** ein Klemmmechanismus (7) vorgesehen ist, der ausgestaltet ist, die Klemmbacken (31, 32) mit der vorgegebenen Klemmkraft (Fₖ) zueinander zu drücken.

8. Schulungs-E-Handschweißbrenner (1) nach Anspruch 7, **dadurch gekennzeichnet, dass** der Klemmmechanismus (7) eine Klemmfeder, vorzugsweise eine Druckfeder oder eine Tellerfeder oder ein Evolutfeder oder eine Ringfeder oder eine Gasdruckfeder, mit einer vorgegebenen Klemmfeder-Steifigkeit (cₖ) zum Bereitstellen der Klemmkraft (Fₖ) aufweist.

9. Schulungs-E-Handschweißbrenner (1) nach Anspruch 7, **dadurch gekennzeichnet, dass** der Klemmmechanismus (7) als elektromagnetischer Klemmmechanismus (7) ausgeführt ist, **und dass** der Klemmhebel (4) zum Betätigen der zumindest einen der Klemmbacken (31, 32) ausgestaltet ist, in der Betätigungsposition (x_{b}) ein elektrisches Schaltelement zu betätigen, welches Schaltelement ausgestaltet ist, in unbetätigtem Zustand ein Schließen des elektromagnetischen Klemmmechanismus (7) zum Klemmen einer Schulungs-Stabelektrode (6) herbeizuführen und in betätigtem Zustand ein Öffnen des elektromagnetischen Klemmmechanismus (7) zum Lösen einer Schulungs-Stabelektrode (6) herbeizuführen.

10. Schulungs-E-Handschweißbrenner (1) nach einem der vorhergehenden Ansprüche, **dadurch gekennzeichnet, dass** eine Gleichgewichtsstellung (xₑ) des Klemmhebels (4) einen Arbeitshub (AH) des Klemmhebels (4) zwischen der Rückstellposition (xᵣ) und der Betätigungsposition (x_{b}) in einen ersten Teilarbeitshub (AH1), der zwischen der Rückstellposition (xᵣ) und der Gleichgewichtsstellung (xₑ) des Klemmhebels (4) angeordnet ist, sowie einen zweiten Teilarbeitshub (AH2), der zwischen der Gleichgewichtsstellung (xₑ) und der Betätigungsposition (x_{b}) angeordnet ist, unterteilt, wobei der Klemmhebel (4) ausgestaltet ist, im zweiten Teilarbeitshub (AH2) eine der Klemmbacken (31, 32) zum Öffnen und Schließen des Klemmmechanismus (7) zu betätigen und im ersten Teilarbeitshub (AH1) keine der Klemmbacke (31, 32) zu betätigen.

11. Schulungs-E-Handschweißbrenner (1) nach einem der vorhergehenden Ansprüche, **dadurch gekennzeichnet, dass** am Schulungs-E-Handschweißbrenner (1) eine Stabelektroden-Einziehanordnung (8) vorgesehen ist, die ausgestaltet ist, eine Simulationsstabelektrode (6) relativ zu den Klemmbacken (31, 32) zu bewegen, um einen Verbrauch einer Simulationsstabelektrode während eines Schulungs-Schweißvorganges zu simulieren.

12. Schulungs-E-Handschweißbrenner (1) nach Anspruch 11, **dadurch gekennzeichnet, dass** die Einziehvorrichtung als elektrischer Getriebemotor (8) ausgeführt ist, der ausgestaltet ist, zumindest eine der Klemmbacken (31, 32) über eine mechanische Welle des Getriebemotors (8) zum Bewegen einer Schulungs-Stabelektrode (6) zu rotieren.

13. Schulungs-E-Handschweißbrenner (1) nach Anspruch 12, **dadurch gekennzeichnet, dass** der Getriebemotor (8) innerhalb des Handschweißbrenner-Grundkörpers (2) angeordnet ist.

14. Schulungs-E-Handschweißbrenner (1) nach einem der vorhergehenden Ansprüche, **dadurch gekennzeichnet, dass** die erste Klemmbacke (31) der Klemmbacken (31, 32) als erste Mess-Elektrode ausgeführt ist und/oder die zweite Klemmbacke (32) der Klemmbacken (31, 32) als zweite Mess-Elektrode ausgeführt ist, um eine Messung eines von einer Schulungs-Stabelektrode (6) an den Klemmbacken (31, 32) eingeprägten elektrischen Messsignale (sₑ₁, sₑ₂) zu ermöglichen, **und dass** ausgehend von zumindest einer der Klemmbacken (31, 32) durch den Handschweißbrenner-Grundkörper (2) eine Kabelführung vorgesehen ist, die ein Signal-Kabel (S_{K1}, S_{K2}) aus den Handschweißbrenner-Grundkörper (2) zur Bereitstellung des an den Klemmbacken (31, 32) eingeprägten Messsignales (sₑ) herausführt.

15. Schulungs-Stabelektrode (6) zur Verwendung in einem Schulungs-E-Handschweißbrenner (1) nach einem der vorhergehenden Ansprüche, aufweisend
- eine erste sich entlang einer Längsachse der Schulungs-Stabelektrode (6) erstreckende Längs-Elektrode (61),
- eine zweite sich entlang der Längsachse der Schulungs-Stabelektrode (6) erstreckende Längs-Elektrode (62),
- sowie ein zwischen den Längs-Elektroden angeordnete isolierenden Schicht (63), sodass eine erste Klemmbacke (31) der Klemmbacken (31, 32) des Schulungs-E-Handschweißbrenners (1) nach einem der Ansprüche 1 bis 15 von der ersten Längs-Elektrode kontaktierbar ist und eine zweite Klemmbacke (32) der Klemmbacken (31, 32) des Schulungs-E-Handschweißbrenner (1) nach einem der Ansprüche 1 bis 15 von der zweiten Längs-Elektrode kontaktierbar ist, um ein veränderliches elektrisches Messsignal (sₑ) an den Klemmbacken (31, 32) einzuprägen.

16. Schulungs-Stabelektrode (6) nach Anspruch 15, **dadurch gekennzeichnet, dass** an zumindest einem axialen Ende der Längsachse der Schulungs-Stabelektrode (6) eine Kraftmessdose zur Generierung eines an den Klemmbacken (31, 32) einprägbaren elektrischen Messsignales (sₑ) vorgesehen ist.

17. Schulungs-Stabelektrode (6) nach einem der Ansprüche 15 oder 16, **dadurch gekennzeichnet, dass** an der Schulungs-Stabelektrode (6) eine erste Mehrzahl von IR-reflektierenden Referenzmarkern (71) angeordnet ist, in einem die Schulungs-Stabelektrode (6) individualisierenden ersten Referenzmuster (72).

18. Schulungs-Stabelektrode (6) nach einem der Ansprüche 15 bis 17, **dadurch gekennzeichnet, dass** zumindest ein Querschnitt der Schulungs-Stabelektrode (6) nur eine Symmetrielinie aufweist.

19. Schweißschulungsanordnung (10) zur Durchführung eines virtuellen Handschweißvorganges, aufweisend
- ein Schulungs-Werkstück (40);
- einen bewegbaren Schulungs-E-Handschweißbrenner (1) nach einem der vorhergehenden Ansprüche 1 bis 15;
- ein Mixed-Reality-Headset (800), aufweisend
a) einen vorgegebenen geometrischen Headset-Bezugspunkt (802);
b) ein Mixed-Reality-Display (801) zur Anzeige einer Sequenz von Mixed-Reality-Bildern (12) des virtuellen Handschweißvorganges;
c) ein Kamerasystem (803) mit einem räumlichen Kamera-Sichtfeld (809) zur Erfassung von Kamera-Bildern von sich im Kamera-Sichtfeld (809) befindenden Objekten, wobei sich während der Durchführung des virtuellen Handschweißvorganges zumindest ein Teil des Schulungs-Werkstücks (40) und zumindest ein Teil des Schulungs-E-Handschweißbrenners (1) im Kamera-Sichtfeld (809) befinden, und wobei das Mixed-Reality-Display (801) und das Kamerasystem (803) entlang einer Sichtlinie (110) des Mixed-Reality-Headsets (800) angeordnet sind;
- eine Simulationseinheit (9), welche ausgestaltet ist, um
a) aus den Kamera-Bildern eine Geometrie und/oder eine Form und/oder eine Type des Schulungs-E-Handschweißbrenners (1) sowie des Schulungs-Werkstücks (40) und einen zeitlichen Verlauf der Raumlagen des Schulungs-E-Handschweißbrenners (1) sowie des Schulungs-Werkstücks (40) relativ zum Headset-Bezugspunkt (802) zu ermitteln;
b) unter Berücksichtigung zumindest eines vorgegebenen Schulungs-Schweißparameters (ps) und unter Berücksichtigung des zeitlichen Verlaufs der Raumlage des Schulungs-E-Handschweißbrenners (1) eine virtuelle Schweißnaht (13) am Schulungs-Werkstück (40) zu ermitteln;
c) zumindest jenen Teil der bis zu einem aktuellen Zeitpunkt Tₐₖₜ des virtuellen Handschweißvorganges ermittelten virtuellen Schweißnaht (13), welcher innerhalb des zum aktuellen Zeitpunkt Tₐₖₜ vorliegenden Kamera-Sichtfeldes (810) liegt, dem zum aktuellen Zeitpunkt Tₐₖₜ vorliegenden Kamera-Bild zu überlagern, um ein Mixed-Reality-Bild (12) des virtuellen Handschweißvorganges zum aktuellen Zeitpunkt Tₐₖₜ zu erzeugen;
d) das ermittelte Mixed-Reality-Bild (12) an das Mixed-Reality-Display (801) zu übermitteln, um es als Teil der Sequenz von Mixed-Reality-Bildern (12) des virtuellen Handschweißvorganges am Mixed-Reality-Display (801) anzuzeigen.

20. Schweißschulungsanordnung (10) nach Anspruch 19, **dadurch gekennzeichnet, dass** die Simulationseinheit (9) ausgestaltet ist, eine simulierte Lichtbogenlänge zwischen einer vom Schulungs-E-Handschweißbrenner (1) gehaltenen Schulungs-Stabelektrode (6) und dem Schulungs-Werkstück (40) zumindest teilweise auf der Grundlage von Daten, die sich auf eine Position, eine Bewegung oder eine Orientierung des Schulungs-E-Handschweißbrenner (1) beziehen, zu bestimmen und eine Einziehrate der Schulungs-Stabelektrode (6) während des virtuellen Handschweißvorganges mindestens teilweise auf der Grundlage der simulierten Lichtbogenlänge anzupassen.

21. Verwendung einer Schweißschulungsanordnung (10) nach Anspruch 19 oder 20 zur Durchführung eines virtuellen Handschweißvorganges, wobei mittels eines Schulungs-E-Handschweißbrenners (1) nach einem der Ansprüche 1 bis 14 eine Schulungs-Stabelektrode (6) nach einem der Ansprüche 15 bis 18 zur Simulation eines Abbrandes einer Schwei-βelektrode bewegt wird.

## Geänderte Patentansprüche

### Geänderte Patentansprüche gemäss Regel 137(2) EPÜ.

1. Schulungs-E-Handschweißbrenner (1) für eine Schweißschulungsanordnung (10) zur Durchführung eines virtuellen Handschweißvorganges, aufweisend
- einen Handschweißbrenner-Grundkörper (2),
- eine Klemmvorrichtung (3) zum Festklemmen einer Schulungs-Stabelektrode (6) mit einer vorgegebenen Klemmkraft (Fₖ), die Klemmvorrichtung (3) aufweisend
∘ eine erste Klemmbacke (31) und eine zweite Klemmbacke (32),
∘ einen am Handschweißbrenner-Grundkörper (2), vorzugsweise drehbar, gelagerten und manuell betätigbaren Klemmhebel (4) zum Betätigen zumindest einer der Klemmbacken (31, 32),
∘ eine zwischen dem Handschweißbrenner-Grundkörper (2) und dem Klemmhebel (4) angeordnete Rückstellvorrichtung (5), die den Klemmhebel (4) ohne manuelle Betätigung in einer Rückstellposition (xᵣ) hält und eine auf den Klemmhebel (4) wirkende Rückstellkraft (Fᵣ) bereitstellt,
**dadurch gekennzeichnet, dass** am Schulungs-E-Handschweißbrenner (1) eine Stabelektroden-Einziehanordnung (8) vorgesehen ist, die ausgestaltet ist, eine Simulationsstabelektrode (6) relativ zu den Klemmbacken (31, 32) zu bewegen, um einen Verbrauch einer Simulationsstabelektrode während eines Schulungs-Schweißvorganges zu simulieren, **und dass** die Rückstellkraft (Fᵣ) größer ist als die Klemmkraft (Fₖ).

2. Schulungs-E-Handschweißbrenner (1) nach Anspruch 1, **dadurch gekennzeichnet, dass** die Rückstellkraft (Fᵣ) die Klemmkraft (Fₖ) um einen vorgegebenen Faktor übersteigt, wobei der vorgegebene Faktor größer ist als ein Faktor 2 oder größer ist als ein Faktor 3 oder größer ist als ein Faktor 5 oder größer ist als ein Faktor 10.

3. Schulungs-E-Handschweißbrenner (1) nach Anspruch 1 oder 2, **dadurch gekennzeichnet, dass** der Klemmhebel (4) zum Betätigen zumindest einer der Klemmbacken (31, 32) mit zumindest einer der Klemmbacken (31, 32) derart bewegungsverbunden ist, dass im Fall einer durch manuelles Überwinden der Rückstellkraft (F_{R}) herbeigeführten Bewegung des Klemmhebels (4) von der Rückstellposition (xᵣ) in eine Betätigungsposition (x_{b}) des Klemmhebels (4) eine Bewegung der zumindest einen Klemmbacke (31, 32) von einer Klemmstellung in eine Öffnungsstellung herbeiführbar ist, wobei eine Schulungs-Stabelektrode (6) in der Klemmstellung der zumindest einen Klemmbacke (31, 32) mit der vorgegebenen Klemmkraft (Fₖ) klemmbar ist und in der Öffnungsstellung vom Schulungs-E-Handschweißbrenner (1) lösbar ist.

4. Schulungs-E-Handschweißbrenner (1) nach Anspruch 3, **dadurch gekennzeichnet, dass** die erste Klemmbacke (31) ortsfest am Handschweißbrenner-Grundkörper (2) angeordnet ist und der Klemmhebel (4) mit der zweiten Klemmbacke (32) bewegungsverbunden ist.

5. Schulungs-E-Handschweißbrenner (1) nach einem der vorhergehenden Ansprüche, **dadurch gekennzeichnet, dass** die Rückstellvorrichtung (5) eine mechanische Feder, vorzugsweise eine Druckfeder oder eine Tellerfeder oder ein Evolutfeder oder eine Ringfeder oder eine Gasdruckfeder, mit einer vorgegebenen Rückstellfeder-Steifigkeit (cᵣ) zum Bereitstellen der auf den Klemmhebel (4) wirkenden Rückstellkraft (Fr) aufweist.

6. Schulungs-E-Handschweißbrenner (1) nach einem der Ansprüche 1 bis 4, **dadurch gekennzeichnet, dass** die Rückstellvorrichtung (5) als elektromagnetischer Rückstellmechanismus zum Bereitstellen der auf den Klemmhebel (4) wirkenden Rückstellkraft (Fr) ausgeführt ist.

7. Schulungs-E-Handschweißbrenner (1) nach einem der vorhergehenden Ansprüche, **dadurch gekennzeichnet, dass** ein Klemmmechanismus (7) vorgesehen ist, der ausgestaltet ist, die Klemmbacken (31, 32) mit der vorgegebenen Klemmkraft (Fₖ) zueinander zu drücken.

8. Schulungs-E-Handschweißbrenner (1) nach Anspruch 7, **dadurch gekennzeichnet, dass** der Klemmmechanismus (7) eine Klemmfeder, vorzugsweise eine Druckfeder oder eine Tellerfeder oder ein Evolutfeder oder eine Ringfeder oder eine Gasdruckfeder, mit einer vorgegebenen Klemmfeder-Steifigkeit (cₖ) zum Bereitstellen der Klemmkraft (Fₖ) aufweist.

9. Schulungs-E-Handschweißbrenner (1) nach Anspruch 7, **dadurch gekennzeichnet, dass** der Klemmmechanismus (7) als elektromagnetischer Klemmmechanismus (7) ausgeführt ist, **und dass** der Klemmhebel (4) zum Betätigen der zumindest einen der Klemmbacken (31, 32) ausgestaltet ist, in der Betätigungsposition (x_{b}) ein elektrisches Schaltelement zu betätigen, welches Schaltelement ausgestaltet ist, in unbetätigtem Zustand ein Schließen des elektromagnetischen Klemmmechanismus (7) zum Klemmen einer Schulungs-Stabelektrode (6) herbeizuführen und in betätigtem Zustand ein Öffnen des elektromagnetischen Klemmmechanismus (7) zum Lösen einer Schulungs-Stabelektrode (6) herbeizuführen.

10. Schulungs-E-Handschweißbrenner (1) nach einem der vorhergehenden Ansprüche, **dadurch gekennzeichnet, dass** eine Gleichgewichtsstellung (xₑ) des Klemmhebels (4) einen Arbeitshub (AH) des Klemmhebels (4) zwischen der Rückstellposition (xᵣ) und der Betätigungsposition (x_{b}) in einen ersten Teilarbeitshub (AH1), der zwischen der Rückstellposition (xᵣ) und der Gleichgewichtsstellung (xₑ) des Klemmhebels (4) angeordnet ist, sowie einen zweiten Teilarbeitshub (AH2), der zwischen der Gleichgewichtsstellung (xₑ) und der Betätigungsposition (x_{b}) angeordnet ist, unterteilt, wobei der Klemmhebel (4) ausgestaltet ist, im zweiten Teilarbeitshub (AH2) eine der Klemmbacken (31, 32) zum Öffnen und Schließen des Klemmmechanismus (7) zu betätigen und im ersten Teilarbeitshub (AH1) keine der Klemmbacke (31, 32) zu betätigen.

11. Schulungs-E-Handschweißbrenner (1) nach Anspruch 1, **dadurch gekennzeichnet, dass** die Einziehvorrichtung als elektrischer Getriebemotor (8) ausgeführt ist, der ausgestaltet ist, zumindest eine der Klemmbacken (31, 32) über eine mechanische Welle des Getriebemotors (8) zum Bewegen einer Schulungs-Stabelektrode (6) zu rotieren.

12. Schulungs-E-Handschweißbrenner (1) nach Anspruch 11, **dadurch gekennzeichnet, dass** der Getriebemotor (8) innerhalb des Handschweißbrenner-Grundkörpers (2) angeordnet ist.

13. Schulungs-E-Handschweißbrenner (1) nach einem der vorhergehenden Ansprüche, **dadurch gekennzeichnet, dass** die erste Klemmbacke (31) der Klemmbacken (31, 32) als erste Mess-Elektrode ausgeführt ist und/oder die zweite Klemmbacke (32) der Klemmbacken (31, 32) als zweite Mess-Elektrode ausgeführt ist, um eine Messung eines von einer Schulungs-Stabelektrode (6) an den Klemmbacken (31, 32) eingeprägten elektrischen Messsignale (sₑ₁, sₑ₂) zu ermöglichen, **und dass** ausgehend von zumindest einer der Klemmbacken (31, 32) durch den Handschweißbrenner-Grundkörper (2) eine Kabelführung vorgesehen ist, die ein Signal-Kabel (S_{K1}, S_{K2}) aus den Handschweißbrenner-Grundkörper (2) zur Bereitstellung des an den Klemmbacken (31, 32) eingeprägten Messsignales (sₑ) herausführt.

14. Schulungs-Stabelektrode (6) zur Verwendung in einem Schulungs-E-Handschweißbrenner (1) nach einem der vorhergehenden Ansprüche, aufweisend
- eine erste sich entlang einer Längsachse der Schulungs-Stabelektrode (6) erstreckende Längs-Elektrode (61),
- eine zweite sich entlang der Längsachse der Schulungs-Stabelektrode (6) erstreckende Längs-Elektrode (62),
- sowie ein zwischen den Längs-Elektroden angeordnete isolierenden Schicht (63),
sodass eine erste Klemmbacke (31) der Klemmbacken (31, 32) des Schulungs-E-Handschweißbrenners (1) nach einem der Ansprüche 1 bis 15 von der ersten Längs-Elektrode kontaktierbar ist und eine zweite Klemmbacke (32) der Klemmbacken (31, 32) des Schulungs-E-Handschweißbrenner (1) nach einem der Ansprüche 1 bis 15 von der zweiten Längs-Elektrode kontaktierbar ist, um ein veränderliches elektrisches Messsignal (sₑ) an den Klemmbacken (31, 32) einzuprägen.

15. Schulungs-Stabelektrode (6) nach Anspruch 14, **dadurch gekennzeichnet, dass** an zumindest einem axialen Ende der Längsachse der Schulungs-Stabelektrode (6) eine Kraftmessdose zur Generierung eines an den Klemmbacken (31, 32) einprägbaren elektrischen Messsignales (sₑ) vorgesehen ist.

16. Schulungs-Stabelektrode (6) nach einem der Ansprüche 14 oder 15, **dadurch gekennzeichnet, dass** an der Schulungs-Stabelektrode (6) eine erste Mehrzahl von IR-reflektierenden Referenzmarkern (71) angeordnet ist, in einem die Schulungs-Stabelektrode (6) individualisierenden ersten Referenzmuster (72).

17. Schulungs-Stabelektrode (6) nach einem der Ansprüche 14 bis 16, **dadurch gekennzeichnet, dass** zumindest ein Querschnitt der Schulungs-Stabelektrode (6) nur eine Symmetrielinie aufweist.

18. Schweißschulungsanordnung (10) zur Durchführung eines virtuellen Handschweißvorganges, aufweisend
- ein Schulungs-Werkstück (40);
- einen bewegbaren Schulungs-E-Handschweißbrenner (1) nach einem der vorhergehenden Ansprüche 1 bis 13;
- ein Mixed-Reality-Headset (800), aufweisend
a) einen vorgegebenen geometrischen Headset-Bezugspunkt (802);
b) ein Mixed-Reality-Display (801) zur Anzeige einer Sequenz von Mixed-Reality-Bildern (12) des virtuellen Handschweißvorganges;
c) ein Kamerasystem (803) mit einem räumlichen Kamera-Sichtfeld (809) zur Erfassung von Kamera-Bildern von sich im Kamera-Sichtfeld (809) befindenden Objekten, wobei sich während der Durchführung des virtuellen Handschweißvorganges zumindest ein Teil des Schulungs-Werkstücks (40) und zumindest ein Teil des Schulungs-E-Handschweißbrenners (1) im Kamera-Sichtfeld (809) befinden, und wobei das Mixed-Reality-Display (801) und das Kamerasystem (803) entlang einer Sichtlinie (110) des Mixed-Reality-Headsets (800) angeordnet sind;
- eine Simulationseinheit (9), welche ausgestaltet ist, um
a) aus den Kamera-Bildern eine Geometrie und/oder eine Form und/oder eine Type des Schulungs-E-Handschweißbrenners (1) sowie des Schulungs-Werkstücks (40) und einen zeitlichen Verlauf der Raumlagen des Schulungs-E-Handschweißbrenners (1) sowie des Schulungs-Werkstücks (40) relativ zum Headset-Bezugspunkt (802) zu ermitteln;
b) unter Berücksichtigung zumindest eines vorgegebenen Schulungs-Schweißparameters (pₛ) und unter Berücksichtigung des zeitlichen Verlaufs der Raumlage des Schulungs-E-Handschweißbrenners (1) eine virtuelle Schweißnaht (13) am Schulungs-Werkstück (40) zu ermitteln;
c) zumindest jenen Teil der bis zu einem aktuellen Zeitpunkt Tₐₖₜ des virtuellen Handschweißvorganges ermittelten virtuellen Schweißnaht (13), welcher innerhalb des zum aktuellen Zeitpunkt Tₐₖₜ vorliegenden Kamera-Sichtfeldes (810) liegt, dem zum aktuellen Zeitpunkt Tₐₖₜ vorliegenden Kamera-Bild zu überlagern, um ein Mixed-Reality-Bild (12) des virtuellen Handschweißvorganges zum aktuellen Zeitpunkt Tₐₖₜ zu erzeugen;
d) das ermittelte Mixed-Reality-Bild (12) an das Mixed-Reality-Display (801) zu übermitteln, um es als Teil der Sequenz von Mixed-Reality-Bildern (12) des virtuellen Handschweißvorganges am Mixed-Reality-Display (801) anzuzeigen.

19. Schweißschulungsanordnung (10) nach Anspruch 18, **dadurch gekennzeichnet, dass** die Simulationseinheit (9) ausgestaltet ist, eine simulierte Lichtbogenlänge zwischen einer vom Schulungs-E-Handschweißbrenner (1) gehaltenen Schulungs-Stabelektrode (6) und dem Schulungs-Werkstück (40) zumindest teilweise auf der Grundlage von Daten, die sich auf eine Position, eine Bewegung oder eine Orientierung des Schulungs-E-Handschweißbrenner (1) beziehen, zu bestimmen und eine Einziehrate der Schulungs-Stabelektrode (6) während des virtuellen Handschweißvorganges mindestens teilweise auf der Grundlage der simulierten Lichtbogenlänge anzupassen.

20. Verwendung einer Schweißschulungsanordnung (10) nach Anspruch 18 oder 19 zur Durchführung eines virtuellen Handschweißvorganges, wobei mittels eines Schulungs-E-Handschweißbrenners (1) nach einem der Ansprüche 1 bis 13 eine Schulungs-Stabelektrode (6) nach einem der Ansprüche 14 bis 17 zur Simulation eines Abbrandes einer Schweißelektrode bewegt wird.
